Europäisches Patentamt

European Patent Office

Office européen des brevets

(11) Publication number: **0 303 457 B1**

(19)

# EUROPEAN PATENT SPECIFICATION

(12)

(45) Date of publication of patent specification: 30.03.94    (51) Int. Cl.⁵: **B65G  17/06**, B65G 21/18, //B65G15/52

(21) Application number: 88307384.3

(22) Date of filing: 10.08.88

(54) **Conveyor belt and system with a non-collapsing inside edge.**

(30) Priority: 10.08.87 US 83272
             21.03.88 US 171390
             29.06.88 US 213171

(43) Date of publication of application:
     **15.02.89 Bulletin  89/07**

(45) Publication of the grant of the patent:
     **30.03.94 Bulletin  94/13**

(84) Designated Contracting States:
     **AT BE CH DE ES FR GB GR IT LI LU NL SE**

(56) References cited:
     US-A- 3 225 898        US-A- 3 938 651
     US-A- 4 036 352        US-A- 4 078 655
     US-A- 4 603 776        US-A- 4 662 509

(73) Proprietor: **ASHWORTH BROS. INC.
     89 Globe Mills Avenue
     Fall River Massachusetts 02724(US)**

(72) Inventor: **Roinestad, Gerald C.
     Route 3
     Winchester, VA 22601(US)**
     Inventor: **Straight, Michael R.
     Rural Route 6, Box 632
     Winchester, VA 22601(US)**

(74) Representative: **Frost, Dennis Thomas et al
     WITHERS & ROGERS
     4 Dyer's Buildings
     Holborn
     London, EC1N 2JT (GB)**

## Description

## TECHNICAL FIELD

This invention relates to a conveyor belt and system designed to travel about lateral curves. More specifically, the invention concerns a conveyor belt which includes transverse rods connected by links disposed along the opposite transverse ends of the rods, wherein the inside ends of the rods along the inside edge of the belt are kept at a constant first pitch and the outside ends of the rods are allowed to move to a second larger pitch.

## BACKGROUND OF THE INVENTION

Conveyor belts comprised of transverse rods connected by links disposed along the opposite transverse edges of the belt have been in use for a long period of time. One such prior art belt uses generally U-shaped nestable links with slotted holes that allow the links to slide on the rods. The relative sliding action between the links and rods provides lateral flexibility which enables the belt to turn right or left, when such nestable links are used on both sides of the belt. When such a belt proceeds around a lateral curve, the rod ends along the inside concave edge of the belt collapse. The opposite transverse ends of the rods along the outside convex edge of the belt either remain at the same pitch as when the belt travels in a straight line direction, such as disclosed in U.S. Patent No. 3,225,898 to Roinestad, or expand to a greater pitch in order to allow the belt to proceed around a smaller radius, as disclosed in U.S. Patent No. 4,078,655 to Roinestad.

The collapsing or diminishing pitch of the belt along the inside edge of a lateral curve creates several problems. First of all, most ware is charged into a conveying system in a rank and file arrangement, and spacing of the ranks (crosswise rows) can only be controlled by adjusting the relative speeds of the individual feed conveyors. To make certain that the ware does not overlap, it is necessary to take into account the collapsing pitch and to also leave a safety margin in the spacing, both of which result in a drop in efficiency. If the ware being convened is soft in nature, the collapsing pitch can result in wrinkling of the ware. Also, if the conveyor is used in a freezing plant, the collapsing pitch can result in contact and freezing together of adjacent ware if sufficient spacing is not used.

U.S. Patent No. 4,662,509 issued to Kaak on May 5, 1987 addresses the problem of a conveyor belt having a collapsing inner edge in a chain type conveyor belt wherein the ware support carriers are connected directly to a drive chain. The chain conveyor belt in the '509 patent uses triangular carriers consisting of a rod-shaped element and a pulling element. Along the inside edge of the conveyor belt, the rod-shaped element and the pulling element are pivotally connected to the drive chain, and the pitch of the rod-shaped elements is held constant by the connection to the drive chain. The pulling elements slant backward in the direction of travel of the belt and are pivotally connected to one of the rod-shaped elements further rearward along the belt. As the belt proceeds around a curve, the outside, free ends of the rod-shaped elements increase their spacing or pitch with respect to one another.

The conveyor belt disclosed in the '509 patent, however, has certain disadvantages or limitations. The triangular configuration of the ware carriers precludes negotiation about end pulleys or rolls, or operating through a vertical hanging take-up mechanism. The practical width of the ware carriers is limited by the triangular configuration, because the effectiveness of the pulling element diminishes with increasing width. Finally, the overlapping orientation of the pulling and rod-shaped elements gives rise to serious sanitation difficulties. The capability to clean between all elements of a belt is important when the conveyor belt is used in a food handling environment.

It has also been discovered that the use of a link mechanism which keeps the inside rod ends at a constant pitch along the inner concave edge of a belt, both with dual pitch links and with nestable U-shaped outside links is particularly suitable for use in a conveying system wherein the belt travels along a helical path with the belt being arranged in a number of superimposed helically extending tiers. Prior art helical tier systems, such as disclosed in U.S. Patent Nos. 3,348,659 and 4,078,656 to Gerald C. Roinestad have used conveying belts with a collapsing inner edge. The successive tiers of belt in the '659 and '655 patents are supported by a support frame separate from the belt. The minimum tier height in such a system is equal to the sum of the heights of the separate belt support frame, the ware being conveyed and the belt, resulting in a system with a relatively large vertical extent. U.S. Patent No. 3,938,651 to Alfred et al. discloses a conveying system for conveying in a helical path wherein the belt is self-supporting along both the inner and outer edges of the belt.

Another aspect of the invention is directed to the construction of the U-shaped links, particularly the construction of the portion connecting the legs to the link. It has been known in the prior art to curve the bearing surface of the connecting portion of U-shaped links. For example, the bearing surface of certain pintle chain links manufactured by the Allied-Locke Industries, Incorporated are curved. However, such prior art curved bearing surfaces for tractive links do not substantially increase the wear characteristics of the links in the manner of the present invention.

According to the present invention, a conveyor belt comprising a plurality of rods extending transversely of the length of the belt between inside and outside edges of the belt; a plurality of first and second rod coupling links none of which is disposed substantially centrally of said rods, said first links being disposed adjacent inside ends of said rods, each of said first links being U-shaped with spaced legs coupling adjacent rods to each other near the inside edge of said belt; and said second links being disposed adjacent outside ends of said rods, each of said second links coupling adjacent rods to each other near the outside edge of said belt, is characterised by a plurality of connectors, disposed outside of and directly adjacent said first links remote from the centres of the respective rods and coupling adjacent rods to each other, said connectors and said first links keeping said rods substantially parallel to each other during straight-line conveying motion of said belt under tractive load; and said belt being constructed for holding said inside ends of said rods at a first pitch relative to each other during straight-line travel of said belt under tractive load, for holding said inside ends of said rods substantially at said first pitch relative to each other during curved travel of said belt and for allowing said outside ends of said rods to move to a second greater pitch relative to each other during said curved travel of said belt.

In a preferred embodiment of the invention, the first links and connectors include at least two generally U-shaped links joining adjacent pairs of the rods, and the second links include at least one link joining adjacent pairs or rods. Each of the U-shaped links has a pair of spaced leg portions extending generally in the lengthwise dimension of the belt and a connecting portion joining the spaced leg portions. Each of the leg portions has holes formed through it for the passage of an adjacent pair of rods. The holes in the leg portions of the first links and the connectors and in the second links have end surfaces with predetermined longitudinal spacing between the end surfaces. The holes in the first links and connectors have a first longitudinal end surface spacing, while the holes in the second links have a second, greater longitudinal end surface spacing. The first longitudinal spacing is correlated to the second longitudinal spacing and to the predetermined radius of curvature so that in straight line conveying motion the inside ends of the rods are kept at the first pitch and the first links and the connectors are tractive while the second links are non-tractive, and during lateral curved conveying motion the inside ends of the rods are kept at substantially the first pitch and at least one of the first links and the connectors remains tractive while the outside ends of the rods move to the second greater pitch.

The correlation of the longitudinal spacing of the end surfaces is preferably set so that the outside ends of the rods contact the opposing surfaces of the holes in the second links when the belt travels around a lateral curve of the predetermined maximum curvature with the second links assuming only a minimal amount of tractive load. Such a correlation assures that at least one of the second links remains tractive and that the inside ends of the rods remain at substantially the first pitch. The use of this correlated spacing is particularly advantageous in a helical tiered conveying system wherein the curvature in the helix is the maxiumum curvature of the system. The belt can then be readily adapted to the system so that a non-collapsing inside edge is assured throughout the tiers of the system, while the outside edge of the belt moving through the tiers is stabilized by the contact of the rods with the end surface of the holes in the second links.

Another embodiment of the link mechanism also holds the first and second transverse ends of the rods at substantially the same first pitch during straight line motion of the belt, and during motion of the belt about a lateral curve, this link mechanism holds the rods to the first pitch along the transverse ends of the rods located at the inside concave edge of the lateral curve. However, this link mechanism moves the opposite transverse ends of the rods to a second greater pitch along the outside convex edge of the lateral curve as the belt proceeds from straight line to lateral curved motion, and returns the opposite transverse ends of the rods to the first pitch as the belt moves from lateral curved to straight line motion.

The conveyor belt using the second embodiment of the link mechanism can be adapted to travel around lateral curves in a single direction or around lateral curves in both the right and left directions. When the belt is designed to travel around lateral curves in a single direction, the link mechanism includes both single pitch links and dual pitch links. However, when the belt is designed to travel around lateral curves in both the left and right directions, dual pitch links are disposed along both edges of the belt. The dual pitch links are pivotable between a first position and a second position. In the first position the transverse ends of the rods connected by the respective links are held at the first pitch; and, during the pivoting motion of the links from the first to the second position, are moved from the first pitch to the second pitch.

Each of the dual pitch links includes a body which has a pivot aperture and a pitch changing slot. The transverse end of one of the rods is received in the pivot aperture and the transverse end of an adjacent one of the rods is slidably received in the pitch changing slot. A cam mechanism is provided for pivoting the dual pitch links between their first and second positions during motion around lateral curves.

A conveyor belt formed of the transverse rods and dual pitch links, or links which allow the outside edge of the belt to expand while keeping the inside edge of the belt at a constant pitch, allows the belt to operate in a straight line direction and around curves without the problems resulting from a conveyor belt that has a collapsing inner edge as it proceeds around lateral curves.

Another preferred aspect of the present invention is directed to the use of at least one support link joining pairs of the adjacent rods. The support links include a longitudinal portion extending both longitudinally between a pair of the adjacent rods and vertically away from the rods, and at least one tab portion extending transversely from the longitudinal portion. Holes are formed in each longitudinal portion to couple the support links to adjacent pairs of rods. The tab portions are spaced a predetermined vertical distance from the rods to contact an inside edge of an adjacent vertically spaced tier of the belt and thereby support the inside edge of the superimposed tiers when the belt is arranged to travel along a helical conveying path.

The present invention is also directed to a conveying system which uses belts of the type described and which moves the belt through a helical conveying path that forms a plurality of stacked tiers of the belt. Belts which have a constant non-collapsing inside pitch are particularly useful in such stacked tier systems since a significantly less amount of belt is required for a given helical path over the amount of belt which is needed using prior art belts with a collapsing inside edge. Less amount of the belt is necessary to accommodate the same amount of an offloading surface. The use of a non-collapsing pitch in combination with a drive drum and support links along the inside edge of the belt is particularly advantageous, because localized shifting of the inside edge of the belt as it moves through the helical path is greatly minimized.

A further preferred aspect of the present invention is directed to the construction of the U-shaped links in a manner to substantially increase their wear characteristics. According to this aspect of the invention, tractive link members for connecting adjacent rods of an endless conveyor belt are comprised of a substantially flat piece of metal which is formed into a general U-shape with a pair of spaced leg portions joined by a connecting portion. The substantially flat piece of metal has a reduced thickness area in the connecting portion formed of a compressed, work-hardened area of the metal. The work-hardened area of the connecting portion forms a curved bearing surface against which a rod can bear.

In the system of the present invention the ware can be loaded as closely as possible, so that for a given ware capacity, the belt can be driven at a lower speed, thereby increasing the life of the belt. Also, the rod-link arrangement allows the belt to be used in normal charge and discharge operations, and about end pulleys, rolls and take-up mechanisms. Also, for a given inside radius of a lateral curve about which the belt travels, the tension on a belt of the present invention in a spiral or curved tier system would be less than with conventional rod-link belts.

The use of support links in accordance with the present invention, wherein the support links are used in combination with constant pitch U-shaped inside links, also results in significant advantages. The support links allow for a significant reduction in height of the external belt support, while maintaining compatibility with sprockets and allowing the belt to proceed about comparatively tight bends around rolls, pulleys, etc. Furthermore, these advantages are attained without the disadvantages of the collapsing inner belt edge mentioned above, such as lower efficiency, wrinkling of ware or freezing together of adjacent ware. A smoother transition from straight line conveying into hellcal, stacked tier conveying also results from preventing the collapse of the inner edge of the belt by the constant pitch U-shaped inside links.

Finally, the use of tractive links having work-hardened bearing surfaces greatly enhances the wear characteristics of the tractive links. The work-hardened, curved inner bearing surface of the connecting portion of the links reduces wear elongation of the links in two ways. First, by increasing the area of contact, the same volume of wear would represent a smaller elongation of the link pitch. Secondly, by forming the curved surface through a coining process which reduces the thickness of the connecting portion from a relatively large thickness to a smaller thickness, the connecting portion becomes a work-hardened, wear resistant section of material. Prevention of wear elongation of tractive links is particularly important for the belt of the present invention wherein the belt and conveyor system are designed so that the inside links remain tractive in both straight line and lateral curved motion, and, as the belt is frequently used in environments where sanitation is important, undesirable wear debris can be diminished.

Further objects, features and other aspects of this invention will be understood from the following detailed description of the preferred embodiment of this invention referring to the annexed drawings.

## BRIEF DESCRIPTION OF THE DRAWINGS

Figure 1 is a plan view of a portion of a conveyor belt in accordance with the present invention, illustrating the belt traveling in a straight line direction;

Figure 2 is a plan view of the conveyor belt of Figure 1, illustrating the belt passing around a lateral curve;

Figure 3 is a sectional view taken generally along lines 3-3 of Figure 1;

Figure 4 is a sectional view taken generally along line 4-4 of Figure 1;

Figure 5 is a plan view of an improved U-shaped link having a work-hardened, curved bearing surface and modified leg portions;

Figure 6 is a side view of the link illustrated in Figure 5;

Figure 7 is a schematic plan view of a portion of a conveyor belt in accordance with the present invention, using a second embodiment of a link mechanism and illustrating the belt passing around a lateral curve;

Figure 8 is a schematic plan view of the conveyor belt of Figure 7, illustrating the belt traveling in a straight line direction;

Figure 9 is side view of a dual pitch link in accordance with the present invention;

Figure 10 is a sectional view taken generally along the line 10-10 of Figure 9;

Figure 11 is a sectional view taken generally along the line 11-11 of Figure 9;

Figure 12 is a schematic side view, illustrating another embodiment of dual pitch links pivoting from a first pitch to a second greater pitch;

Figure 13 is a schematic side view similar to Figure 12, illustrating the dual pitch links pivoting from the second greater pitch to the first shorter pitch;

Figure 14 is an end view, partially in section, illustrating a guide track for receiving a rod end;

Figure 15 is a schematic top plan view illustrating a conveyor belt designed to travel in both lateral directions with dual pitch links on both transverse edges of the belt;

Figure 16 is a side view of a support link in accordance with the present invention;

Figure 17 is a front edge view of the support link illustrated in Figure 16;

Figure 18 is a top plan view of the support link illustrated in Figure 16;

Figure 19 is a schematic vertical sectional view illustrating a pair of stacked tiers of a conveyor belt with the support links disposed along the inside edge of the belt;

Figure 20 is a top plan view of a portion of the conveyor belt illustrated in Figure 19;

Figure 21 is a side view along the inside transverse edge of the conveyor belt illustrated in Figure 19;

Figure 22 is a schematic drawing of a conveyor system in accordance with the present invention wherein the belt conveys about a helical path and is driven by a frictional drive mechanism; and

Figure 23 is a schematic drawing of another embodiment of a conveyor system in accordance with the present invention wherein the conveyor belt conveys about a helical path and is driven by a positive drive mechanism.

## DETAILED DESCRIPTION OF THE INVENTION

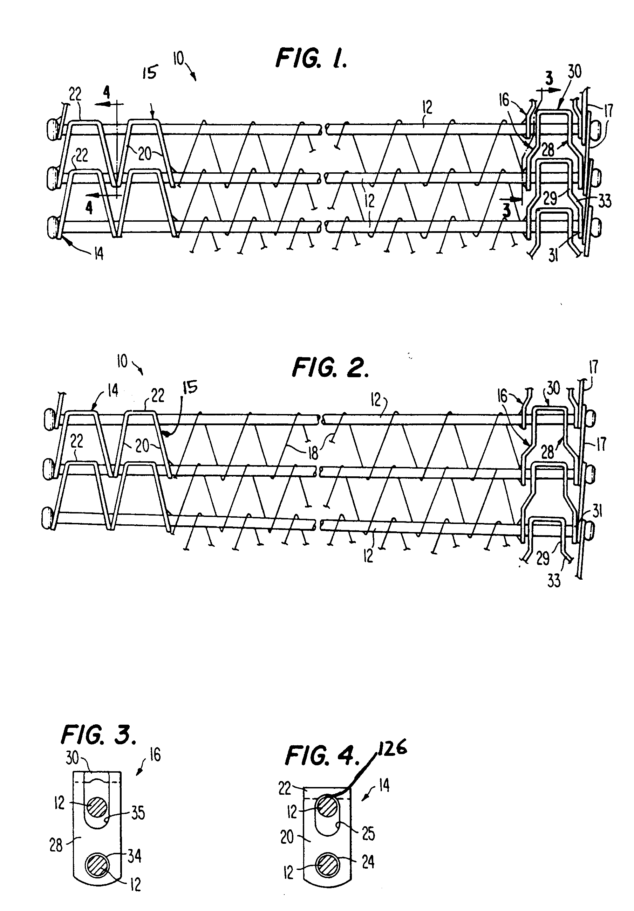

Referring to the Figures wherein like numerals indicate like elements, a portion of a conveyor belt 10 is shown in Figures 1 and 2. Figure 1 illustrates the orientation of belt 10 as it moves in a straight line conveying motion, and Figure 2 illustrates the orientation of belt 10 as it moves in a lateral curved direction to the left. The left edge of belt 10 therefore can be described as the inside concave edge of belt 10, while the right edge can be described as the outside convex edge of belt 10. Conveyor belt 10 is formed of a plurality of rods 12, which extend transversely of the length of belt 10 between inside and outside ends, inside links 14 and 15 along the inside edge of belt 10 and outside links 16 and 17 along the opposite, outside edge of belt 10. Links 14, 16 and 17 couple adjacent rods 12 to one another to form a length of belt 10. A woven mesh material 18 may be disposed around rods 12 and between links 14 and 16. The ends of rods 12 have enlarged or upset ends. Insidemost links 14 are held in position by welding to the inside enlarged ends of rod 12. The outermost inside links 15 and outside links 16 are likewise held in transverse position by being welded to rods 12.

Links 14 and 15 are generally U-shaped links having leg portions 20 which extend generally in the lengthwise direction of belt 10, and connecting portions 22, which join leg portions 20. Leg portions 20 have a pair of spaced holes 24, 25 for receiving the inside ends of a pair of rods 12. Holes 24, at the trailing end of link 14 and 15, are slightly oversized with respect to the cross-sectional dimension of rod 12 to permit cleaning of the belt. Holes 25, at the leading end of links 14 and 15, are in the form of a slot of oversized width, likewise for the purpose of permitting cleaning. Holes 24 and 25 are located and shaped so that the inside ends of rods 12 are kept at a first pitch (center to center spacing between adjacent rods 12) when the belt is under tractive load. Also, links 14 and 15 and rods 12 along the inside concave edge of belt 10 remain under tractive load during both straight line motion and lateral curved motion. As will be explained, the inside portions of rods 12 are kept at the first pitch and under tractive load in both straight line motion and lateral curved motion of belt 10 by the specific design of the combination of links 14,15,16 and 17, which form a link mechanism for belt 10.

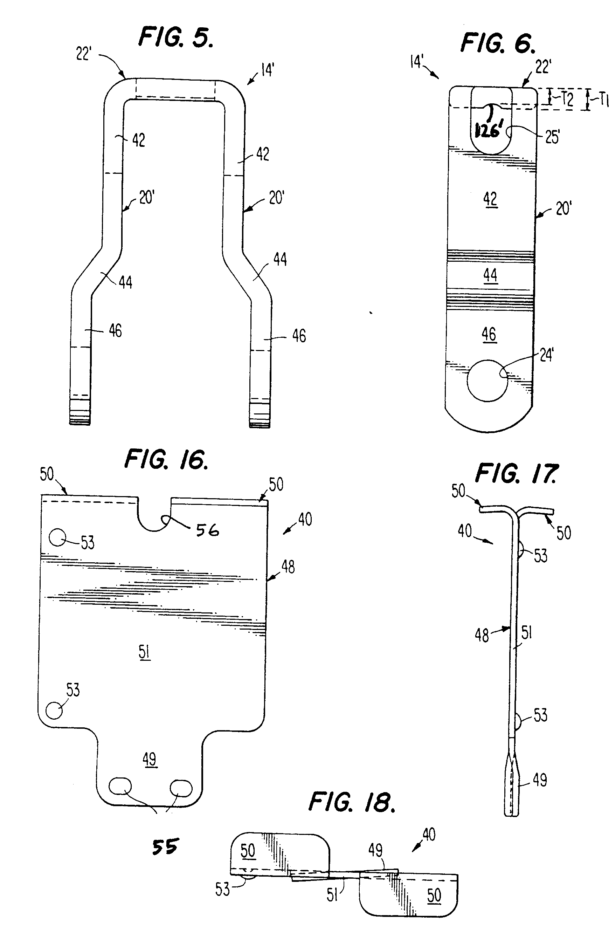

Inside links 14 and 15 have leg portions 20 which are substantially straight and which diverge outwardly from opposite ends of connecting portion 22. Alternatively, the inside links can be configured as links 14', which are also generally U-shaped and are illustrated in Figures 5 and 6. Link 14' has a connecting portion 22' similar to connecting portion 22, however, leg portions 20' are formed different from leg portions 20. Each leg portion 20' includes an inner section 42 extending generally perpendicularly from connecting portion 22', a middle section 44 diverging outwardly from inner section 42, and an outer section 46 extending from middle section 44 in a direction generally parallel to inner section 42.

Outside links 16 likewise each have a pair of spaced apart leg portions 28 joined by a connecting portion 30. Leg portions 28, like leg portions 20', include inner and outer sections 29 and 31, orientated perpendicular to connecting portion 30, which are joined by a middle outwardly diverging section 33 so that leg portions 28 take on a stepped configuration, gradually increasing in width away from connecting portion 30. Such a configuration is similar to prior art nestable U-shaped links. As seen in Figure 3, each leg portion 28 has a pair of holes 34, 35 for receiving adjacent rods 12. Hole 35, which is adjacent connecting portion 30 is in the form of an elongate slot, which allows rods 12 to move from the collapsed position shown in Figure 1 during straight line conveying motion, to the expanded position shown in Figure 2, during conveying about lateral curves.

In addition to U-shaped links 16, bar links 17 can be disposed in a single row along the outer transverse edge of belt 10 between outside links 16 and the enlarged heads at the outer ends of rods 12. Similar to links 16, links 17 have a pair of holes, at least one of which is slotted to permit the expansion of the pitch of the outer edge of belt 12.

Each link 14, 14' is formed of a substantially flat piece of metal. The flat piece of metal has a first thickness $T_1$ along the top and bottom areas of connecting portions 22, 22' and along leg portions 20, 20'. A curved bearing surface 126,126' is formed in the inner surface of connecting portions 22, 22', while the outer surface remains substantially flat. Bearing surface 126,126' is formed by a coining process wherein the material of connecting portions 22, 22' is compressed to a maximum reduced thickness $T_2$. The compressed, reduced thickness area thus becomes a work-hardened area of connecting portions 22, 22'. The maximum reduced thickness $T_2$ is at least 90% of thickness $T_1$ and not less than preferably 70%, with a typical example being $T_1$ of 0.105 inch (2.7mm) reduced to $T_2$ of 0.08 inch (2.0mm). The curved bearing surface substantially mates with the outer surface of rod 12, i.e. has substantially the same radius of curvature. Links 16 can also include a work-hardened bearing surface. However, this is not necessary since links 16 are designed not to take on any significant tractive load.

Conveyor belt 10 and links 14,15 16 and 17 are designed to be used in a conveying system wherein belt 10 will travel about lateral curves in a single direction and the lateral curves have a predetermined maximum curvature, i.e., the radius of curvature of the tightest lateral curve in the system will not be below a predetermined value. Links 14,15 16 and 17 will have predetermined spacing between the forwardmost and rearwardmost surfaces of the holes in the links which is correlated to the predetermined maximum curvature of the belt travel and to one another. This correlation of spacing is set to assure that the portions of rods 12 along the inside edge of the belt remain at substantially the first pitch, and that at least one of the inside links 14, 14' continues to bear a tractive load while the belt proceeds around lateral curves up to the predetermined maximum curvature.

Conveyor belt 10 is driven along its inside edge in a conventional manner by a drive sprocket or drive cage engaging the inside edge of the belt. As the belt travels in a straight line direction, the tractive load is shared by all the inside links, and the inside ends of the rods are kept at the first pitch. The use of at least two inside U-shaped links assures that rods 12 extend substantially parallel during straight line motion under tractive load. If only one U-shaped link were used along the inside edge, the rods might extend in a non-parallel manner due to inaccuracies in the formation of the U-shape. It is therefore important that a plurality of inside links be used to assure the parallel alignment of the rods.

As belt 10 travels about a lateral curve, the outside ends of rods 12 expand in the slots of the outside links 16, 17 and the tractive load gradually shifts to the inside links farthest from the inside edge of the belt. Links 14 and 15 have a first predetermined spacing between the forwardmost and rearwardmost surfaces of their holes, and outside links 16 and 17 have a second, greater spacing between the forwardmost and rearwardmost surfaces of their holes. The first and second predetermined spacings are correlated to one another and to the predetermined maximum curvature of the belt so that outside links 16 and 17 assume only a minimal amount of the tractive load during travel about a lateral curve of the predetermined maximum curvature. Preferably, this predetermined spacing results in rods 12 contacting the bearing surfaces of the holes in outside links 16 and/or 17 without assuming any measurable tractive load so that inside links 14 and 15 continue to assume substantially all the tractive load. This condition is particularly desirable because links 16 and 17 will allow only a negligible amount of play between links 16, 17 and the bearing surfaces of rods 12, thereby assuring smoothness of operation, while also insuring that the inside links remain tractive and the inside edge of the belt does not collapse. This is accomplished by setting the ratio of the spacing ($P_o'$) of the holes in the outside links 16, 17 to the distance ($R_o$) from the center of the radius of curvature of the belt to the outermost outside links in the tightest curve only slightly greater than the ratio of the spacing ($P_i$) of the holes 24, 25 in the inside links 14 and 15 to the distance ($R_i$) from the center of the radius of curvature of the belt to the outermost leg 20 of inside links 14 and 15. Using the equation:

$$\underline{\frac{R_o}{R_i}} \quad x \quad P_i = P_O;$$

then

$P_o'$ = $P_o$ + 0.005 to 0.010 inches. For example, in a system with a four and a half (4 1/2) foot (1.37m) radius drive cage, two one-inch (2.54mm) inside links, and a three (3) foot (0.91m) wide belt: $R_i$ = 56 inches (1.42m); $R_o$ = 90 inches (2.29m); $P_i$ = 1.080 inches (27.4mm); and $P_o$ = 1.735 inches (44.1mm); then $P_o'$ = 1.740 to 1.745 inches (44.2 to 44.3mm). In such a belt, where the tractive load in the helical path could typically be 200 pounds, (880 Newtons) the inside links would continue to assume 150 to 200 pounds (660 to 880N) of the tractive load in lateral curves of the predetermined maximum curvature.

In addition, U-shaped outside links 16 serve an important function in preventing the outer edge of belt 10 from lagging an unacceptable amount behind the perfect radial extension of rod 12 from inner links 14 and 15. Such lagging is a result of a drag force created by the weight of belt 10 and its associated product load on a support surface as the belt moves about a lateral curve. In order for the rods to lag, links 16 would have to rotate with respect to a perfect radial line of the rods in a curved path; however, such rotation is held to a minimum by the nesting action of consecutive U-shaped outside links 16, thereby restricting the amount of lag that can occur. For manufacturing ease, when U-shaped links 16 are used in combination with bar links 17, bar links 17 can be designed to have the correlated spacing $P_o'$ and links 16 can have an even greater longitudinal spacing between the end surfaces of their holes, thereby functioning principally to prevent lag.

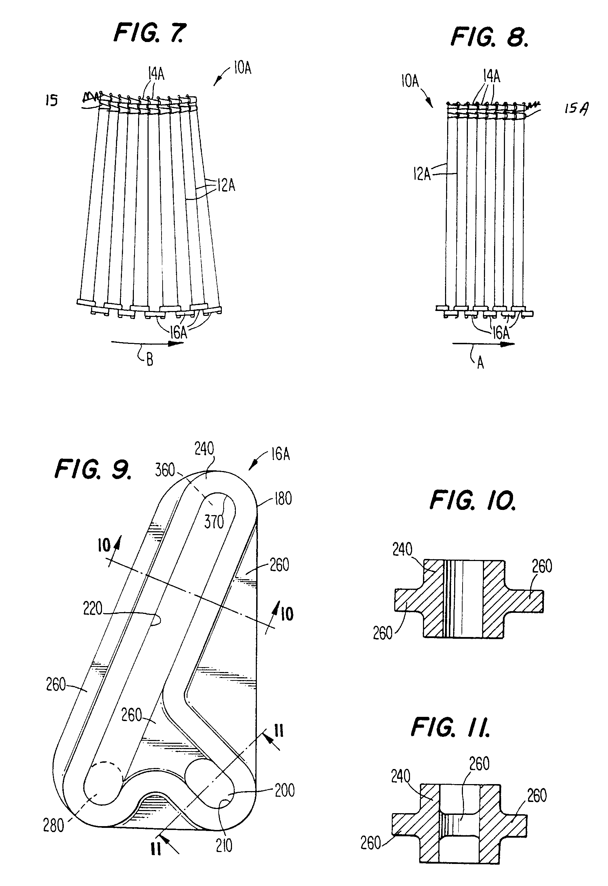

Referring to the Figures 7-15, a second embodiment of a conveyor belt, designated generally 10a is illustrated. A portion of a conveyor belt 10a is shown in Figures 7 and 8. Conveyor belt 10a is formed of a plurality of rods 12a, single pitch links 14a and 15a along one edge of belt 10 and dual pitch links 16a along the opposite edge of belt 10. Rods 12a extend transversely of the length of belt 10a and they have enlarged or upset ends. Links 14a, 15a and 16a couple adjacent rods 12a to one another to form a length of belt 10a.

Single pitch links 14a and 15a can be conventional U-shaped links having apertures for receiving the inside ends of a pair of rods 12A. The apertures in links 14a and 15a are slightly oversized with respect to the cross-sectional dimension of rods 12a to permit cleaning, nevertheless, links 14a and 15a hold the ends of rods 12a to substantially a constant or single pitch. Alternatively links 14a and 15a can be formed with work-hardened bearing surfaces as in links 14 and 14' or can take on the configuration of links 14'.

Links 16a are dual pitch links designed to change the pitch of rods 12a (spacing between adjacent rods 12a) along the edge at which they are disposed between a first pitch and a second greater pitch. The first pitch is substantially equal to the pitch at which links 14a and 15a hold the inside ends of rods 12a during straight line motion as shown in Figure 8. When belt 10a proceeds around a lateral curve, as shown in Figure 7, dual pitch links 16a move the outside ends of the rods to which they are coupled to the second greater pitch along the outside convex edge of the lateral curve, while links 14a and 15a hold the inside ends of the rods to which they are attached to the first pitch along the inside concave edge of the lateral curve. As with rods 12, the inside portions of rods 12a are kept at substantially the first pitch and under tractive load in both straight line motion and lateral curved motion of belt 10a by the specific design of the combination of single pitch links 14a and 15a and dual pitch links 16a, which form a link mechanism for belt 10a.

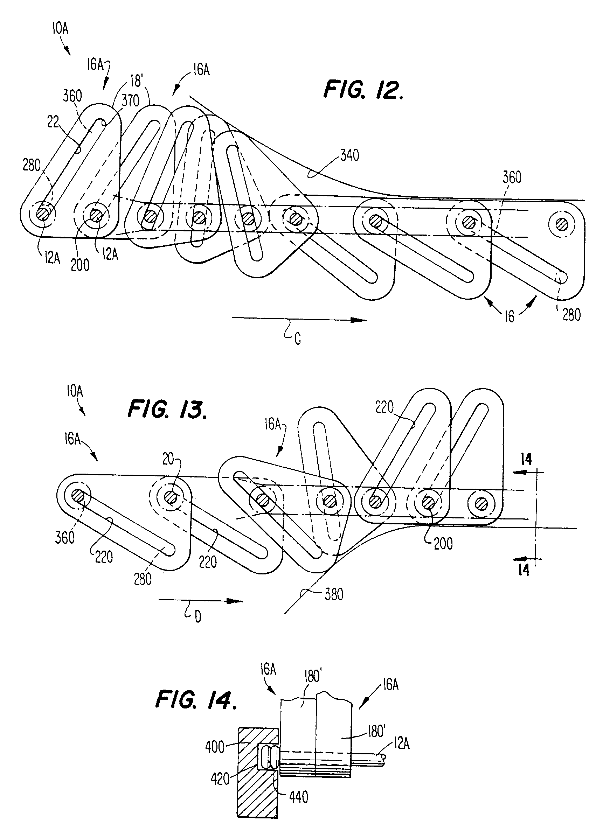

Figure 9 illustrates the structural details of one embodiment of a dual pitch link 16a. Link 16a is preferably formed as a single integral body 180 which has a generally triangular shape or perimeter. A pivot aperture 200 and an elongate pitch changing slot 220 are formed through body 180 of dual pitch link 16a. As further illustrated in Figures 10 and 11, body 180 can be formed of two thicknesses of material, i.e., a thick portion 240 extending around a substantial portion of aperture 200 and slot 220, and a thinner web portion 260 filling in and extending around the border of thicker portion 240. A two thickness configuration of body 180 is particularly suitable for a body 180 formed of a molded plastic material wherein a sturdy border is provided for aperture 200 and slot 220, while the thinner web portions 260 form an easy to handle, structurally sound and material saving configuration for the integral body 180.

Figures 12 and 13 illustrate an alternate, simplified configuration for the body of dual pitch links 16a, identified as body 180'. As seen therein, body 180' is formed of a flat piece of material containing aperture 200 and slot 220. The shape of body 180' is particularly suitable for links 16a made from machined metal.

Referring to Figures 7, 8, 12 and 13, operation of belt 10a will be explained. Figure 8 illustrates belt 10a proceeding in a straight line direction indicated by arrow A. As seen therein the pitch is the same at both edges of belt 10a. Links 14a and 15a are single pitch links which hold adjacent rods at this constant pitch. The position of adjacent rods in straight line conveying is illustrated in Figure 12 by the left-most pair of rods 12a, and the three right-most rods in Figure 13. Referring to Figure 12, a first rod 12a is received in pivot aperture 200 of the left-most dual pitch link 16a and an adjacent rod 12a is received in pitch changing slot 220 of this link 16a. The last-mentioned rod 12a is located in a first pitch area 280 of slot 220 which locates adjacent rods 12a at substantially the same pitch as links 14a and 15a locate the adjacent rods. This pitch is the shortest pitch allowed by link 16a. In this condition, tractive load can be shared between the U-shaped single pitch links 14a and 15a and the dual pitch links 16a. Links 14a, 15a and 16a can be dimensioned, however, so that the relative amounts of tractive load can be shared unevenly. For example, when dual pitch links 16a are formed of a plastic material, it is desirable to have single pitch links 14a and 15a, which are generally formed of metal, carry more of the tractive load.

The orientation of rods 12a, when belt 10a proceeds around a lateral curve, as shown by arrow B, is illustrated in Figure 7. As seen therein, the inside concave edge of belt 10a remains at the same first pitch as in straight line motion, while the outside convex edge of belt 10a has been moved to a greater pitch by dual pitch links 16a. Figure 12 illustrates the pivoting motion of links 16a that moves the outside ends of rods 12a along the outside edge to the second greater pitch. As seen therein, a cam surface or the like 340 for pivoting the dual pitch links is located adjacent outside edge of belt 10a in alignment with links 16a. As belt 10a proceeds in the direction of arrow C, an upper edge of links 16a contacts cam surface 340 which causes links 16a to pivot in a counterclockwise direction. The pivoting motion of links 16a causes the ends of rods 12a received in the pitch changing slot 220 to slide from the first pitch area 280, wherein adjacent rods 12a are close to one another, to a second pitch area 360 where the spacing between adjacent rods 12a is greater. The pitch changing slot second pitch area forwardmost end surface is 370. See also, Figure 9. As seen in Figure 12, cam surface 340 can cause link 16a to pivot 90° and locate rod 12a carried in slot 220 at the furthest end of slot 220 to contact the second pitch area 360 end surface 370. The length and orientation of pitch changing slot 220 is selected to accommodate the greatest pitch along outside curve edge for a given system. Of course, if smaller pitches are required within the same system, cam surface 340 can be designed to pivot dual pitch links 16a to a lesser degree, thereby locating the end of rod 12a received in slot 220 within an intermediate position in second pitch area 360.

Figure 13 illustrates the manner in which links 16a are pivoted to return rods 12a from the second pitch used in lateral curved motion to the first pitch used in straight line conveying. As shown therein, belt 10a proceeds in the direction of arrow D and links 16a contact a cam surface or the like 380, which pivots links 16a in a clockwise direction. The clockwise pivoting motion of links 16a moves the ends of transverse rods 12a from the second pitch area 360 to the first pitch area 280 of pitch changing slots 220.

As seen in Figure 14, an elongate guide block 400, having a guide slot 420, can be located adjacent the belt outer edge in the transition area where cam surfaces 340 and 380 cause pivoting motion of links 16a. The outermost end of rods 12a are carried within guide slot 420 to keep the ends of rods 12a within the plane of conveying motion of belt 10a during pivoting of links 16a. As further seen in Figure 14, the ends of rods 12a received within slot 420 preferably have a double struck upset head, which assures that the end of transverse rod 12a remains within guide slot 420 even after wear occurs. Guide slot 420 can be eliminated at curves where smooth travel of the belt is not required, for example, on return portions of the conveyor where no ware is being transported, or on a loaded portion of the conveyor if a slight momentary humping of the conveyor surface will not disarrange the ware.

Similar to conveyor belt 10 and links 14, 15, 16 and 17, conveyor belt 10a and links 14a, 15a and 16a can be used in a conveying system embodiment wherein belt 10a will travel about lateral curves in a single direction and the lateral curves have a predetermined maximum curvature, i.e., the radius of curvature of the tightest lateral curve in the system will not be below a predetermined value. Single pitch links 14a and 15a and dual pitch links 16a will have predetermined spacing between the forwardmost and rearwardmost surfaces of the holes or slots in the links which are correlated to the predetermined maximum curvature of the belt travel and to one another. This correlation of spacing is set to assure that the portions of rods 12a along the inside edge of the belt remain at substantially the first pitch, and that at least one of the inside single pitch links continues to bear a tractive load while the belt proceeds around lateral curves up to the predetermined maximum curvature. This correlation of spacing is set in the same manner as discussed above with respect to belt 10.

Conveyor belt 10a, also similar to conveyor belt 10, is driven along its inside edge in a conventional manner by a drive sprocket or drive cage engaging the inside edge of the belt. As the belt travels in a straight line direction, the tractive load is normally shared by all the single pitch links 14a and 15a, and the inside ends of the rods are kept at the first pitch. The use of at least two inside U-shaped links helps assure that rods 12a extend substantially parallel during straight line motion under tractive load.

As belt 10a travels about a lateral curve, the outside ends of rods 12a expand in the pitch changing slots 220 of the dual pitch links 16a. The rod actually expands from the slot first pitch area 280 to the second pitch area 360. Also, the tractive load gradually shifts to one of the two single pitch links which is farthest from the inside edge of the belt.

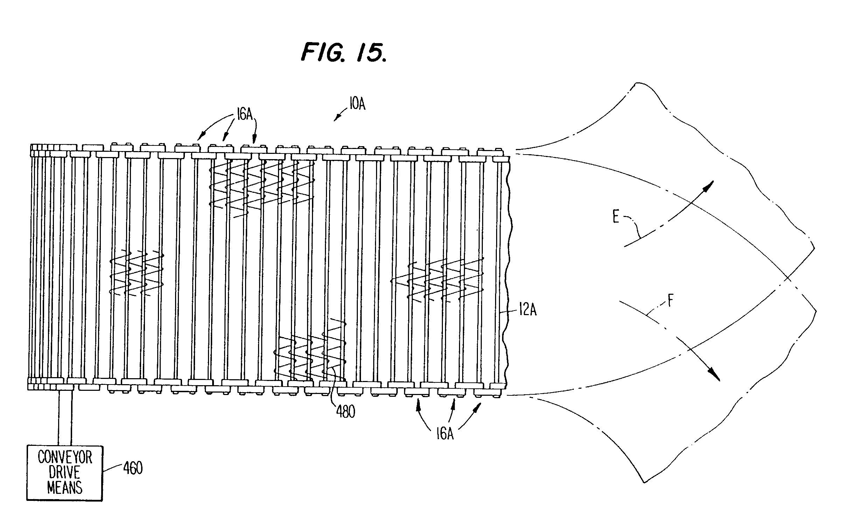

Figure 15 illustrates an embodiment of belt 10a wherein a conveyor system uses dual pitch links 16a disposed along both sides of the belt in order to allow the belt to travel in both the left and right directions as shown by arrows E and F. In such motion, the dual pitch links on the inside edge of the curve would remain at the first pitch position, while dual pitch links 16a along the outside edge of the curve would be pivoted to the second, greater pitch orientation. Figure 15 also illustrates belt 10a as part of a conveying system with a conventional conveyor drive mechanism 460, such as a sprocket drive, for moving the conveyor belt 12a.

A mesh overlay 480 placed around rods 12a is also illustrated in Figure 15. Mesh overlay 480 can be of any conventional design, such as wire formed into flattened helicals. The overlay is used to provide support for relatively easily damaged ware. The overlay can be manufactured to a width somewhat wider than its final assembled form on belt 10a so that it provides pressure in the transverse direction against both the inner and outer links to assure that they maintain their transverse position on rods 12a, thereby eliminating the need for further welding or the use of mechanical devices to hold the links in place.

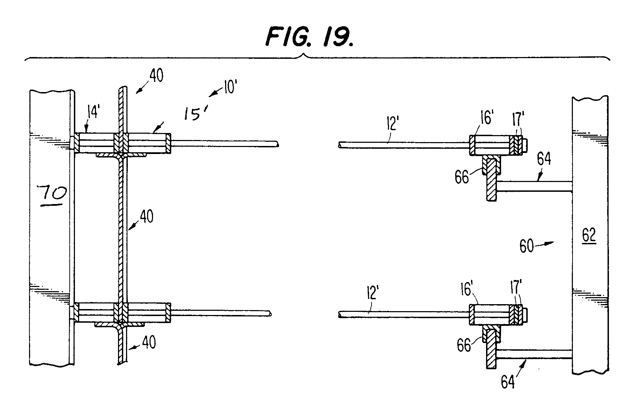

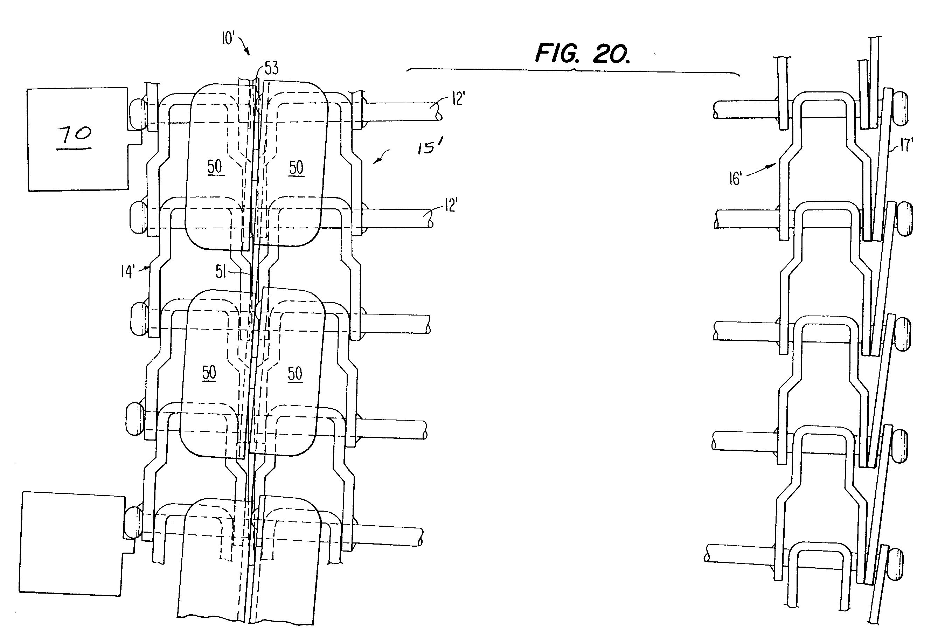

Figures 19, 20, and 21 illustrate an embodiment of the invention wherein a conveyor belt 10' is used in a conveying system in which belt 10' travels along a helical path comprised of a number of superimposed helically extending tiers. The conveyor belt of this embodiment will be designated 10', with elements of belt 10' which are similar to belt 10 indicated by like primed numerals. Figures 16, 17 and 18 illustrate details of an inside support link 40 used with belt 10'.

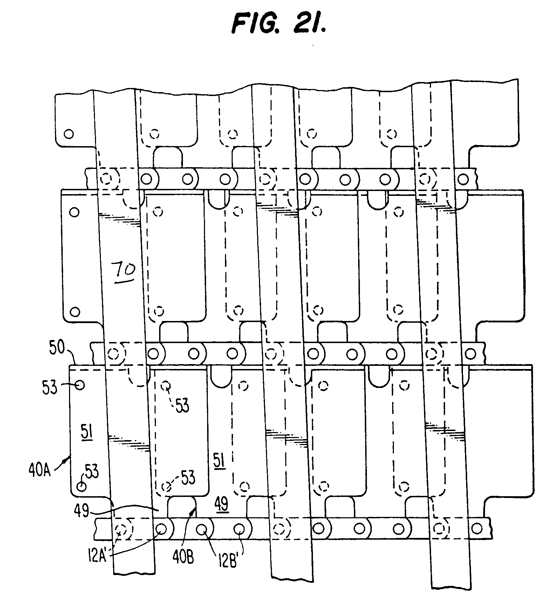

Support links 40 include a longitudinal portion 48 and tab portions 50. Longitudinal portion 48 is formed in two sections, i.e. a lower section 49 and an upper section 51. Lower section 49 contains a pair of holes 55 for receiving ends of adjacent rods 12', and tab portions 50 extend in opposite transverse directions from an upper end of upper section 51. Upper section 51 extends both upward and longitudinally in two directions from lower section 49. As best seen in Figure 21, a first support link 40A is coupled to a first pair of adjacent rods 12A', while the next support link 40B is coupled to the next separate pair of adjacent rods 12B'. Lower section 49 is held in alignment with the direction of travel of belt 10' by end sections 46 of U-shaped links 14'. Upper section 51 of support links 40 are angularly offset by approximately 4 degrees from the respective lower sections 49 in order to allow the longitudinal ends of adjacent longitudinal portions 51 to overlap. One end of longitudinal portions 51 include dimples 53 which keep the overlapping portions of adjacent support links 40 out of contact to permit cleaning. As seen in Fig. 16, upper portion 51 includes slot 56 disposed between tab portions 50.

Each tab portion 50 has a width which is sufficient to contact and support links 14' and 15' disposed in a tier above it. Also, the length of each tab portion 50 is set so that belt 10' can proceed around reverse bends without adjacent tab portions 50 coming into contact with one another.

As seen in Figure 19, as the belt proceeds around a helical path, the outer ends of belt 10' are supported by an independent support structure 60. Support structure 60 includes a plurality of vertical members 62 (one of which is illustrated), from which a plurality of horizontal tier supports 64 extend. Each tier support 64 includes a low friction bearing material 66 on which outer links 16' slide. The inside edge of belt 10' is supported on a rotating base (not shown) and successive tiers of the helical path created by belt 10' are supported one upon another by means of support links 40. To accomplish this self-supporting feature, the vertical distance which tab portions 50 are located above rods 12' is selected to accommodate the particular helical path and the ware to be supported on belt 10'. Belt 10' is driven by an internal rotating cage which includes a plurality of vertically extending driving members 70. Figure 19 illustrates belt 10' with generally U-shaped outside link 16' and bar links 17'. However, belt 10' can also incorporate dual pitch links 16a along the outside edge of belt 10'.

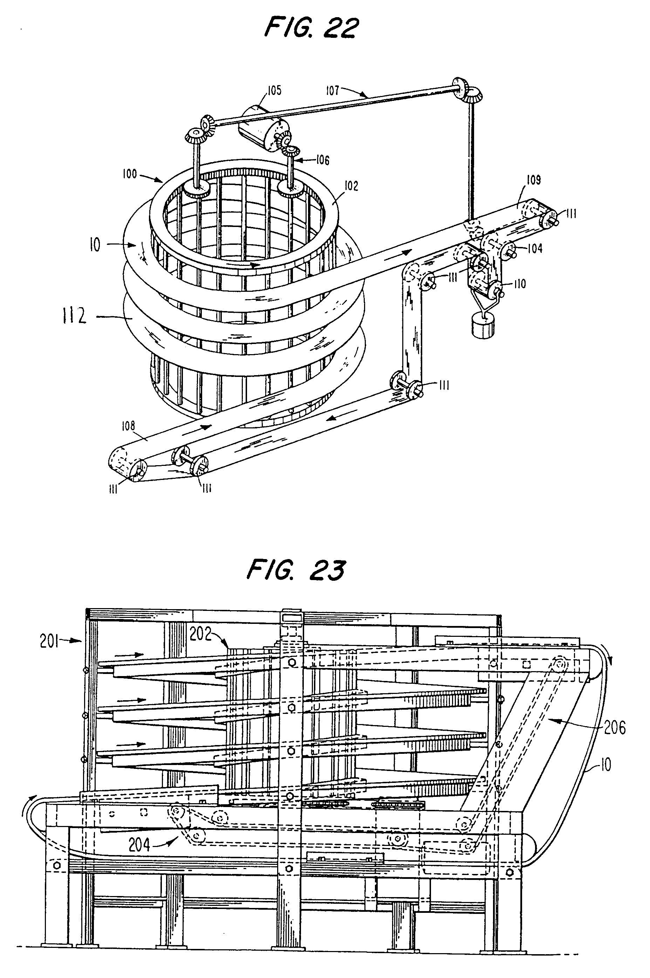

Referring now to Figure 22 a spiral low tension helical tier conveying system 100 of the type shown in U.S. Patent Nos.4,078,655 and 3,348,659 is illustrated. System 100 can incorporate either of the belts 10, 10' or 10a of the present invention. Since the low tension system is fully described in these patents, which are herein incorporated by reference, and such helical conveying systems are known in the art only a brief description will be given here. In such a low tension system 100, a cage type driving drum 102 frictionally engages the inner edge of belt 10, (10', 10a) to drive it with relatively low tension through a helical path around the drum. In addition, a positive sprocket drive 104 engages the belt 10 along a straight portion thereof. A motor 105 drives the drum 102 through gearing 106 and also drives the positive sprocket drive 104 through interconnected gearing 107. The belt 10 travels from the sprocket drive 104, past weighted tension take up roller 110 and idler pulleys 111 to a straight loading portion 108, then in helical loops 112 around the drum 102 to a straight discharge portion 109 and around another idler 111 back to the drive sprocket.

Referring now to Figure 23 a spiral very low tension helical tier conveying system 201 of the type shown in U.S.Patent No.4,741,430, issued on May 3, 1988 to Gerald C. Roinestad is illustrated. System 201 can incorporate either of the belts 10, 10' or 10a of the present invention. Since the very low tension system is fully described in that patent application, which is herein incorporated by reference, and such helical conveying systems are known in the art only a brief description will be given here. In such a system 201, a cage type driving drum 202 positively engages the inner edge of belt 10 (10', 10a) to drive it with very low tension through a helical path around the drum. Driving drum 202 functions as the primary drive for the belt moving in the helical path; however, secondary drives 204 and 206 are provided adjacent the inlet and outlet of the helical path to maintain a desired fixed length of the belt in the helical path.

Belts 10 and 10' are particularly suited for use in helical tier systems 100 and 201. The maximum curvature of the system is located in the helical path and the spacing between the openings in links 14, 15, 16, 17 (and 40, if used), or between 14a, 15a and 16a, is correlated to the radius of curvature of the helical path. This assures non-collapse of the inner edge of the belt within the helical path, while at the same time assuring smooth operation of the belt along its outer edge.

As seen in Figure 22, a helical conveying system includes an endless conveyor belt 10 (10', 10a), having a straight-line loading section 108, a helical path section 112 and a straight-line discharge section 109. As seen in Figures 1 and 2, the belt has a plurality of transverse rods 12 extending from an inner lateral edge to an outer lateral edge of the belt. Rods 12 are interconnected by innermost inside links 14 near the ends thereof adjacent the inner lateral edge in a helical path section 112. Interconnections between links 16 and 17 and rods 12 along the outer edge of the belt 10 of Figures 1 and 2 permit relative expansive longitudinal movement of an amount sufficient to accommodate the increase in distance which occurs during the transition of the belt from its straight-line loading section 108 configuration to a curved configuration having a desired radius of curvature for the helical path section 112.

As seen in Figures 1 and 2, the belt also includes outermost inside or third links 15 interconnected to adjacent transverse rods 12 and disposed outside of but directly adjacent the innermost inside or first links 14.

The system can also include frictional (figure 22) or positive (Figure 23) driving elements on the inside of the belt having vertically extending driving members 70 (Figures 19-21) for placing tension on the inner row of links 14' and 15'. One can also use a sprocket drive as in Figure 15.

This invention has been described in detail in connection with the illustrated preferred embodiments. These embodiments, however, are merely for example only and the invention is not restricted thereto. It will be easily understood by those skilled in the art that other variations and modifications can be easily made within the scope of this invention, as defined by the appended claims.

**Claims**

1. A conveyor belt (10) comprising:
   a plurality of rods (12) extending transversely of the length of the belt between inside and outside edges of the belt; a plurality of first and second rod coupling links none of which is disposed substantially centrally of said rods, said first links (14) being disposed adjacent inside ends of said rods, each of said first links being U-shaped with spaced legs (20) coupling adjacent rods to each other near the inside edge of said belt; and said second links (16 or 17) being disposed adjacent outside ends of said rods, each of said second links coupling adjacent rods to each other near the outside edge of said belt, characterised by a plurality of connectors (15), disposed outside of and directly adjacent said first links (14) (seen from the center of a curve during curved travel of the belt) remote from the centres of the respective rods and coupling adjacent rods (12) to each other, said connectors and said first links keeping said rods substantially parallel to each other during straight-line conveying motion of said belt under tractive load; and said belt being constructed for holding said inside ends of said rods at a first pitch relative to each other during straight-line travel of said belt under tractive load, for holding said inside ends of said rods substantially at said first pitch relative to each other during curved travel of said belt and for allowing said outside ends of said rods to move to a second greater pitch relative to each other during said curved travel of said belt.

2. A conveyor belt as claimed in Claim 1, wherein each of said connectors (15) further comprises a pair of legs (20) extending generally lengthwise of the belt and coupling adjacent rods (12) at spaced locations therealong.

3. A conveyor belt as claimed in claim 1, wherein each of said connectors (15) is substantially U-shaped, and each of said U-shaped connectors further comprises a pair of leg portions (20) extending generally lengthwise of the belt and a leg-connecting portion (22) joining said leg portions, and each of said leg portions have holes (24,25) formed therethrough for receiving adjacent rods (12).

4. A conveyor belt as claimed in any one of claims 1 to 3, wherein, during straight-line conveying motion, said first links (14) and said connectors (15) are tractive while said second links (16 or 17) are non-tractive and, during lateral curved conveying motion, at least said first links or said connectors remain tractive.

5. A conveyor belt as claimed in any preceding claim, wherein said first links (14) said second links (16 or 17) and said connectors (15) are separate and distinct elements from said rods (12).

6. A conveyor belt according to any preceding claim, further comprising at least one support link (40) disposed adjacent said first links (14) and said connectors (15), said support link being adapted to contact and support an inside edge of an adjacent vertically spaced tier of said belt when said belt is arranged to travel along a helical conveying path.

7. A conveyor belt according to claim 6, wherein said support link (40) is coupled between pairs of said adjacent rods (12) and said support link further comprises a longitudinal portion (48) extending both longitudinally between a pair of adjacent rods and vertically away from said rods and at least one tab portion (50) extending transversely from said longitudinal portion, said longitudinal portion having holes (55) through which an adjacent pair of rods extend, said tab portions being spaced a predetermined vertical distance from said rods.

8. A conveyor belt according to claim 7, wherein said at least one tab portion (50) further comprises first and second tab portions extending out from said longitudinal portion (48) in opposite transverse directions.

9. A conveyor belt as in claim 7 or 8, wherein said longitudinal portion (48) of said support link (40) has a lower section (49) with holes (55) for coupling to said rods (12) and an upper section (51) extending vertically and longitudinally from the lower section, said upper section being angularly offset from the lower section and having a longitudinal dimension such that upper sections of adjacent support links can overlap one another.

10. A conveyor belt as in any one of claims 6 to 9, wherein said connectors (15) are U-shaped links with one each of said first links (14) and connector U-shaped links being disposed on either side of said support link (40).

11. A conveyor belt as in any preceding claim, wherein said second links (16,17) further comprise at least one bar link (17) having holes for receiving and coupling adjacent pairs of said rods (12).

12. A conveyor belt as in any preceding claim, wherein each of said first links (14) and said connector (15) have holes (24,25) slightly oversized with respect to the cross-dimensional width of said rods (12).

13. A conveyor belt as in any preceding claim, wherein said second links (16) have longitudinal slots (35) interconnecting said adjacent rods (12) along the outside edge of said belt, said slots receive said transverse rods near the ends thereof and are of a sufficient length to allow the desired relative movement of said rods in changing from said straight-line travel of said belt to said curved travel of said belt.

14. A conveyor belt as in any preceding claim, wherein the ratio of an inside turn radius of said belt to a width of said belt is less than 1.4 to 1.

15. A conveyor belt as claimed in claim 1 for conveying in both a straight-line direction and around lateral curves in a single direction:

    the lateral curves having a predetermined maximum curvature with a predetermined radius of curvature; wherein

    said first links (14) and said connectors (15) are generally U-shaped links joining inside ends of adjacent rods (12), said first links and said connectors are defined as the inside links and said second links (16,17) are defined as the outside links; and

    said generally U-shaped inside links (14 and 15) each having a pair of spaced leg portions (20) joined by a connecting portion (22), each of said leg portions having holes (24 and 25) for receiving adjacent rods, each of said outside links (16 or 17) having holes (34 and 35) for receiving adjacent rods, said holes in said legs of said inside links (14 and 15) having end surfaces with a first predetermined longitudinal spacing, said holes in said outside links having end surfaces with a first predetermined longitudinal spacing, said holes in said outside links having end surfaces with a second predetermined longitudinal spacing, said first and second longitudinal spacings being correlated to one another and to the predetermined radius of curvature so that in straight-line conveying motion the inside ends of said rods are kept at a first pitch and the U-shaped inside links (14 and 15) are tractive while the outside links (16 or 17) are non-tractive, and during lateral curved conveying motion the inside ends of said rods are kept at substantially the first pitch and at least one of said U-shaped inside links (14 and 15) remains tractive while the outside ends of said rods move to a second greater pitch.

16. A conveyor belt in accordance with claim 15, wherein said connecting portion (22) of each of said U-shaped inside links has a work-hardening bearing surface (126) against which one of said rods can bear.

17. A conveyor belt in accordance with claim 15 or 16, wherein the correlation between the longitudinally spaced end surfaces of the holes (24, 25, 34, 35) in said inside and outside links (14, 15, 16, 17) causes the outside ends of said rods (12) to contact the opposing end surfaces in the holes (34 and 35) of said outside links when the belt travels about a lateral curve of the predetermined maximum curvature with the outside links assuming a minimal amount of tractive load to assure that at least one of said inside links remains tractive and the inside ends of said rods remain at substantially the first pitch.

18. A conveyor belt in accordance with claim 17, wherein the ratio of the predetermined spacing between the holes (34, 35) of said outside links (16,17) to the distance from the center of the predetermined radius of curvature to the outermost outside links (17) is only slightly greater than the ratio of the predetermined spacing between the holes (24,25) in said inside links (14,15) to the distance from the center of the predetermined radius of curvature to the outermost leg (20) of said inside links.

19. A conveyor belt as claimed in any one of claims 15 to 18, wherein the lateral curves include a helical path having the predetermined maximum curvature with a predetermined radius of curvature, said belt further comprising a support link (40) disposed along the inside edge of said belt, said support link (40) having a longitudinal portion (48) extending both longitudinally between a pair of said adjacent rods and vertically away from said rods and at least one tab portion (50) extending transversely from said longitudinal portion, said tab portion being spaced a predetermined vertical distance from said rods to contact and support an inside edge of an adjacent vertically spaced tier of said belt when said belt travels along the helical path, said longitudinal portion of said support link having holes (55) for receiving adjacent rods.

20. A conveyor belt in accordance with claim 19, wherein said support link (40) is disposed between a pair of said U-shaped inside links (14 and 15), said spaced leg portions (20) of said U-shaped inside links have end sections adjacent to the longitudinal portion of said support link, and said end sections extend substantially perpendicular to the transverse extent of said rods to align the support link with respect to said rods.

21. A conveyor belt as claimed in any one of claims 15 to 20 for use in a conveying system (100 or 201) including drive means (102 or 202) for moving the belt along a conveying path, said system orientating the belt in both a straight-line direction and around lateral curves in a single direction, the lateral curves including a helical portion (112) forming a plurality of stacked tiers of the belt, and having the predetermined maximum curvature with a predetermined radius of curvature in the helical portion.

22. A conveyor belt in accordance with claim 19 or 20, wherein said spaced leg portions (20) of said inside links (14 and 15) have end sections (46) adjacent to the longitudinal portion (48) of said support link (40), and said end sections extend substantially perpendicular to the transverse extent of said rods (12) to align said support link with respect to said rods.

23. A conveyor belt as claimed in claim 1, wherein said first links (14) are work-hardened area links including:
two leg portions (20); and
a connecting portion (22) joined to each of said two leg portions;
said connecting portion and each of said two leg portions define a generally U-shaped link member; and
said connecting portion includes:
a first thickness area ($T_1$); and
a second, reduced thickness area ($T_2$), said reduced thickness area being a compressed work-hardened area which has a surface (126) against which one of said rods (12) can bear.

24. A conveyor belt as claimed in claim 23, wherein said work-hardened area links are for assuming tractive load, each of said leg portions (20) having at least one hole (25) for receiving one of said rods (12) of the conveyor belt, and said surface (126) against which one of said rods can bear is a curved bearing surface which defines a portion of said hole.

25. A conveyor belt as claimed in claim 24, wherein said curved bearing surface (126) has a curvature approximately the same as said rods (12) so that one of said rods can bear against said bearing surface.

26. A conveyor belt as claimed in any one of claims 23 to 25, wherein the second, reduced thickness area ($T_2$) of said connecting portion (22) is reduced to at least 90% of the first thickness area ($T_1$) at the point of maximum reduction.

27. A conveyor belt as claimed in any one of claims 23 to 26, wherein each of said work-hardened area links is formed as a single integral U-shaped link.

28. A conveyor belt as claimed in any one of claims 23 to 27, wherein said connecting portion (22) has a substantially flat outer surface opposite said surface (126) on which one of said rods can bear.

29. A conveyor belt as claimed in any one of claims 23 to 28, wherein each of said leg portions (20) further comprise an outwardly diverging section (44).

30. A conveyor belt as claimed in claim 29, wherein each of said leg portions further comprise:
an inner section (42) disposed between the connecting portion (22) and the outwardly diverging section (44), said inner section having a hole (25) for receiving one of said rods (12) of the conveyor belt which can bear against the reduced thickness area ($T_2$) in the connecting portion; and
an outer section (46) extending from the outwardly diverging section and having a hole (24) for receiving an adjacent rod.

31. A conveyor belt as claimed in claim 30, wherein said outer section (46) is generally parallel to said inner section (42) and said outwardly diverging section (44) forms a single offset between the generally parallel inner and outer sections of the legs.

32. A conveyor belt as claimed in claim 30 or 31, wherein the outwardly diverging section (44) extends generally perpendicular from the connecting portion (22).

33. A conveyor belt as claimed in claim 1, further comprising a support link (40) disposed generally along the inside edge of said belt, said support link including:
a generally upright, longitudinal portion (48) having upper (51) and lower portions (49), said lower portion including at least one transverse opening means (55) for receiving therein at least one of said rods; and
first and second support tab portions (50) extending out from said upper portion (51) in opposite transverse directions.

34. A conveyor belt as claimed in claim 33, wherein said lower portion (49) of the support link (4) is longitudinally narrower than said upper portion (51).

35. A conveyor belt as claimed in claim 33 or 34, wherein said opening means (55) defines first and second openings for first and second rods (12).

36. A conveyor belt as claimed in any one of claims 33 to 35, wherein said first and second tab portions (50) are spaced in a longitudinal direction.

37. A conveyor belt as claimed in any one of claims 33 to 36, wherein said upper portion (51) includes a slot (56) disposed between said first and second tab portions (50) of the support link (40).

38. A conveyor belt as claimed in any one of claims 33 to 37, wherein said upper portion (51) is angularly offset from said lower portion (49) of the support link (40).

39. A conveyor belt as claimed in claim 38, wherein said upper portion (51) of the support link (40) is angularly offset from said lower portion (49) by approximately four degrees.

40. A conveyor belt as claimed in any one of claims 33 to 39, wherein said longitudinal portion (48) of the support link (40) necks down from said upper portion (51) to said lower portion (49).

41. A conveyor belt as claimed in claim 1 for travel around lateral curves in a single direction, wherein:
    said first links (14) and said connectors (15) further comprise a plurality of single pitch links disposed approximately along the inside edge of the belt and having holes (24 and 25) for receiving first transverse ends of said rods (12) during substantially all motion of the belt; and
    said second links further comprise a plurality of dual pitch links (16a) disposed approximately along the outside edge of the belt, said dual pitch links being capable of pivoting motion between a first position and a second position with the second transverse ends of said rods being disposed at the first pitch in the first position of said dual pitch links and the second transverse ends of said rods being disposed at the second pitch in the second position of said dual pitch links.

42. A conveyor belt as claimed in claim 41, wherein each of said dual pitch links (16a) includes a body (180) having a pivot aperture (200) about which the dual pitch links can pivot and a pitch changing slot (220), the second transverse end of one of said rods (12) being received in said pivot aperture (200) and the second transverse end of an adjacent one of said rods being slidably received in said pitch changing slot (220), said pitch changing slot having a first pitch area where the second transverse end of said adjacent one of said rods is received when the rods are spaced by the first pitch and a second pitch area where the second transverse end of said adjacent one of said rods is received when the rods are spaced by the second pitch.

43. A conveying system comprising:
    an endless conveyor belt (10) as claimed in any preceding claim, to define a straight line section (108) and a laterally curved section (112); and
    means (102,202) for driving said conveyor belt so that said belt follows along said stright line section and then along said laterally curved section.

44. A conveying system as in claim 43, wherein said laterally curved section (112) is helical.

45. A conveying system as in claim 44, wherein said belt driving means includes a rotatable drum (102) mounted to rotate about a vertical axis, said drum including an outer surface which engages inner lateral edge regions of said belt (10).

46. A conveying system as in claim 44, wherein said belt driving means includes an internal rotating cage (202) having a plurality of vertically extending driving members.

47. A conveying system as in any one of claims 44 to 46, wherein said belt driving means (102,202) drives said belt (10) by relatively low tension.

48. A conveying system as claimed in any one of claims 44 to 47, wherein said laterally curved section (112) forms a plurality of stacked tiers of the belt (10) and said system further comprises at least one support link (40) disposed adjacent said first links (14) and said connectors (15), said support link contacting and supporting an inside edge of an adjacent vertically spaced tier of said belt when said belt is arranged to travel along the laterally curved section.

**49.** A conveying system as in claim 44, wherein said belt driving means further comprises a rotatable driving member (102) frictionally engaging inner edge regions of said belt (10) in the laterally curved section (112).

**50.** A conveying system as in claim 44, wherein said belt driving means further comprises a rotatable driving member (202) positively engaging inner edge regions of said belt (10) in the laterally curved section (112).

**51.** A conveying system as in any one of claims 43 to 50, wherein, during straight-line conveying motion, said first links (14) and said connectors (15) are tractive while said second links (16 or 17) are non-tractive and, during lateral curved conveying motion, at least said first links or said connectors remain tractive.

**52.** A conveying system including a conveyor belt (10) in accordance with claim 41 or 42, the system including means (340 or 380) for pivoting said dual pitch links (16a) between said first and second positions.

**53.** A conveying system as claimed in claim 52 wherein said means for pivoting includes a cam surface (340 or 380) for engaging said dual pitch links (16a).

**Patentansprüche**

**1.** Förderband (10), welches folgendes aufweist: eine Mehrzahl von Stäben (12), welche in Querrichtung der Längserstreckung des Bandes zwischen den innenliegenden und außenliegenden Rändern des Bandes verlaufen; eine Mehrzahl von ersten und zweiten Stabverbindungsgliedern, von denen keines im wesentlichen mittig von den Stäben angeordnet ist, wobei die ersten Glieder (14) in der Nähe der innenliegenden Enden der Stäbe angeordnet sind, jedes erste Verbindungsglied U-förmig ausgebildet ist und im Abstand liegende Schenkel (20) hat, welche benachbarte Stäbe miteinander in der Nähe des innenliegenden Randes des Bandes verbinden; und die zweiten Verbindungsglieder (16 oder 17) in der Nähe der außenliegenden Enden der Stäbe angeordnet sind, und jedes der zweiten Verbindungsglieder benachbarte Stäbe miteinander in der Nähe des außenliegenden Randes des Bandes verbindet, **dadurch gekennzeichnet**, daß eine Mehrzahl von Verbindern (15) vorgesehen ist, welche außerhalb von und direkt den ersten Verbindungsgliedern (14) benachbart (von der Mitte einer Kurve bei kurvenförmiger Bandbewegungsbahn aus gesehen) entfernt von den Mittelpunkten der zugeordneten Stäbe angeordnet sind und benachbarte Stäbe (12) miteinander verbinden, die Verbinder und die ersten Verbindungsglieder die Stäbe während der geradlinigen Förderbewegung des Bandes unter Zugbelastung im wesentlichen parallel Zueinander halten, daß das Band derart ausgelegt ist, daß die innenliegenden Enden der Stäbe in einem ersten regelmäßigen Abstand relativ zueinander während der geradlinigen Bewegungsbahn des Bandes unter Zugkraft gehalten sind, die innenliegenden Enden der Stäbe im wesentlichen in dem ersten regelmäßigen Abstand relativ zueinander während der kurvenförmigen Bahn des Bandes gehalten sind, und daß zugelassen wird, daß die außenliegenden Enden der Stäbe sich um einen zweiten, größeren regelmäßigen Abstand relativ zueinander während der kurvenförmigen Bandbewegungsbahn bewegen können.

**2.** Förderband nach Anspruch 1, bei dem jeder der Verbinder (15) ferner ein Paar von Schenkeln (20) aufweist, welche im allgemeinen in Längsrichtung des Bandes verlaufen und benachbarte Stäbe (12) an in Abstand liegenden Stellen entlang der Längserstreckung verbinden.

**3.** Förderband nach Anspruch 1, bei dem jeder der Verbinder (15) im wesentlichen U-förmige ausgebildet ist und jeder der U-förmig ausgebildeten Verbinder ferner ein Paar von Schenkelabschnitten (20) aufweist, welche im allgemeinen in Längsrichtung des Bandes verlaufen, und einen Schenkelverbindungsabschnitt (22) aufweisen, welcher die Schenkelabschnitte verbindet, und bei dem jeder der Schenkelabschnitte Öffnungen (24, 25) hat, welche dieselben zur Aufnahme der benachbarten Stäbe (12) durchsetzen.

**4.** Förderband nach einem der Ansprüche 1 bis 3, bei dem während der geradlinigen Förderbewegung die ersten Verbindungsglieder (14) und die Verbinder (15) unter Zugbelastung sind, während die zweiten Verbindungsglieder (16 oder 17) nicht unter Zugbelastung sind, und daß während der seitlichen, kurvenförmigen Förderbewegung wenigstens die ersten Verbindungsglieder oder die Verbinder unter Zugbelastung bleiben.

**5.** Förderband nach einem der vorangehenden Ansprüche, bei dem die ersten Verbindungsglieder (14), die zweiten Verbindungsglieder (16 oder 17) und die Verbinder (15) gesonderte und einzelne Elemente von den Stäben (12) sind.

6. Förderband nach einem der vorangehenden Ansprüche, welches ferner wenigstens eine Stützverbindung (40) aufweist, die in der Nähe der ersten Verbindungsglieder (14) und der Verbinder (15) angeordnet ist, wobei die Stützverbindung derart beschaffen und ausgelegt ist, daß ein innenliegender Rand eines benachbarten, vertikal im Abstand liegenden Trums des Bandes kontaktiert und abgestützt wird, wenn das Band derart angeordnet ist, daß es sich längs einer spiralförmigen Förderbahn bewegt.

7. Förderband nach Anspruch 6, bei dem die Stützverbindung (40) als Verbindung zwischen den Paaren von benachbarten Stäben (12) vorgesehen ist, und daß die Stützverbindung ferner einen Längsabschnitt (48) aufweist, welcher sowohl in Längsrichtung zwischen einem Paar von benachbarten Stäben als auch vertikal in einem Abstand von den Stäben verläuft, und wenigstens einen lappenförmigen Ansatzabschnitt (50) aufweist, welcher in Querrichtung von dem Längsabschnitt verläuft, wobei der Längsabschnitt Öffnungen (55) hat, durch die ein benachbartes Paar von Stäben geht, und wobei die lappenförmigen Ansatzabschnitte in einem vorbestimmten vertikalen Abstand von den Stäben angeordnet sind.

8. Förderband nach Anspruch 7, bei dem wenigstens ein lappenförmiger Ansatzabschnitt (50), ferner erste und zweite Ansatzabschnitte aufweist, welche sich von dem Längsabschnitt (48) in entgegengesetzt gerichtete Querrichtungen nach außen erstrecken.

9. Förderband nach Anspruch 7 oder 8, bei dem der Längsabschnitt (48) der Stützverbindung (40) einen unteren Abschnitt (49) mit Öffnungen (55) zur Verbindung mit den Stäben (12), und einen oberen Abschnitt (51) hat, welcher vertikal und in Längsrichtung bezüglich des unteren Abschnitts verläuft, wobei der obere Abschnitt in Winkelrichtung zu dem unteren Abschnitt versetzt angeordnet ist und derartige Längsabmessungen hat, daß die oberen Abschnitte der benachbarten Stützverbindungen sich miteinander überlappen können.

10. Förderband nach einem der Ansprüche 6 bis 9, bei dem die Verbinder (15) U-förmige Verbindungsglieder mit jeweils einem der ersten Verbindungsglieder (14) sind, und bei dem die U-förmigen Verbindungsglieder an der jeweiligen Seite der Stützverbindung (40) angeordnet sind.

11. Förderband nach einem der vorangehenden Ansprüche, bei dem die zweiten Verbindungsglieder (16, 17) ferner wenigstens eine Verbindungsglied (17) aufweisen, welches Öffnungen zur Aufnahme und zur Verbindung von benachbarten Paaren von Stäben (12) hat.

12. Förderband nach einem der vorangehenden Ansprüche, bei dem jedes der ersten Verbindungsglieder (14) und der Verbinder (15) Öffnungen (24, 25) hat, welche geringfügig bezüglich der Querschnittsbreite der Stäbe (12) größere Abmessungen haben.

13. Förderband nach einem der vorangehenden Ansprüche, bei dem die zweiten Verbindungsglieder (16) Längsschlitze (35) haben, welche die benachbarten Stäbe (12) entlang des außenliegenden Randes des Bandes untereinander verbinden, wobei die Schlitze die Querstäbe in der Nähe ihrer Enden aufnehmen und so ausreichend lang bemessen sind, daß die gewünschte Relativbewegung der Stäbe bei dem Übergang von der geradlinigen Bahn des Bandes zu der gekrümmten bzw. kurvenförmig verlaufenden Bahn des Bandes möglich ist.

14. Förderband nach einem der vorangehenden Ansprüche, bei dem das Verhältnis eines innenliegenden Kurvenradiuses des Bandes zu einer Breite des Bandes kleiner als 1,4 zu 1 ist.

15. Förderband nach Anspruch 1 zum Fördern sowohl in einer geradlinigen Richtung als auch um seitliche Kurven in einer einzigen Grundförderrichtung mit folgenden Einzelheiten:
    die querverlaufenden Kurven eine vorbestimmte maximale Krümmung mit einem vorbestimmten Krümmungsradius haben;
    bei dem
    die ersten Verbindungsglieder (14) und die Verbinder (15) im allgemeinen U-förmige Glieder sind, welche die innenliegenden Enden benachbarter Stäbe (12) verbinden, die ersten Verbindungsglieder und die Verbinder als innenliegende Verbindungsglieder vorgesehen sind, und die zweiten Verbindungsglieder (16, 17) als außenliegende Verbindungsglieder vorgesehen sind; und
    die im allgemeine U-förmigen, innenliegenden Verbindungsglieder (14 und 15) jeweils ein Paar von im Abstand liegenden Schenkelabschnitten (20) haben, welche durch einen Verbindungsabschnitt (22) verbunden sind, jeder der Schenkelabschnitte Öffnungen (24 und 25) zur Aufnahme benachbarter Stäbe hat, jedes der außenliegenden Verbindungsglieder (16 oder 17) Öffnungen (34 und 35) zur Aufnahme benachbarter Stäbe hat, die Öffnungen in den Schenkeln der innenliegenden Verbindungsglieder (14 und 15) Endflächen mit einem ersten vorbestimmten Längsabstand haben, die Öffnungen an den außenliegenden Verbindungsgliedern Endflächen mit einem ersten vorbestimmten Längsabschnitt haben, die Öffnungen in den außenliegenden Verbindungsgliedern Endflächen mit einem zweiten vorbestimmten Längsabstand haben, die ersten und zweiten Längsabstände einander und zu dem vorbestimmten Krümmungsradius derart zugeordnet sind, daß bei der geradlinigen Förderbewegung die innenliegenden Enden der Stäbe in einem ersten Abstand gehalten sind und die U-förmigen, innenliegenden Verbindungsglieder (14 und 15) unter Zugbelastung sind, während die außenliegenden Verbindungsglieder (16 oder 17) nicht unter Zugbelastung sind, daß während der in Querrichtung gerichteten Kurvenförderbewegung die innenliegenden Enden der Stäbe im wesentlichen mit dem ersten regelmäßigen Abstand gehalten sind und wenigstens eines der U-förmigen, innenliegenden Verbindungsglieder (14 und 15) unter Zugbelastung bleibt, während die außenliegenden Enden der Stäbe sich um einen zweiten, größeren regelmäßigen Abstand bewegen.

16. Förderband nach Anspruch 15, bei dem der Verbindungsabschnitt (22) jedes der U-förmigen, innenliegenden Verbindungsglieder eine Kaltverfestigungslagerfläche (126) bildet, gegen die einer der Stäbe zur Anlage kommen kann.

17. Förderband nach Anspruch 15 oder 16, bei dem die Zuordnung zwischen den in Längsrichtung im Abstand liegenden Endflächen der Öffnungen (24, 25, 34, 35) in den innenliegenden und außenliegenden Verbindungsgliedern (14, 15, 16, 17) bewirkt, daß die außenliegenden Enden der Stäbe (12) die gegenüberliegenden Endflächen in den Öffnungen (34 und 35) der außenliegenden Verbindungsglieder kontaktieren, wenn sich das Band um eine seitlich gerichtete Kurve mit dem vorbestimmten maximalen Krümmungsradius bewegt, wobei die außenliegenden Verbindungsglieder eine minimale Größe einer Zugbelastung erhalten, um sicherzustellen, daß wenigstens eines der innenliegenden Verbindungsglieder unter Zugbelastung bleibt, und die innenliegenden Enden der Stäbe etwa mit dem ersten regelmäßigen Abstand angeordnet bleiben.

18. Förderband nach Anspruch 17, bei dem das Verhältnis des vorbestimmten Abstands zwischen den Öffnungen (34, 35) der außenliegenden Verbindungsglieder (16, 17) zu dem Abstand von der Mitte des vorbestimmten Krümmungsradiusses der zu äußerst liegenden, außenliegenden Verbindungsglieder (17) nur geringfügig größer als das Verhältnis des vorbestimmten Abstandes zwischen den Öffnungen (24, 25) in den innenliegenden Verbindungsgliedern (14, 15) zu dem Abstand von der Mitte des vorbestimmten Krümmungsradiuses zu den am weitesten außenliegenden Schenkel (20) der innenliegenden Verbindungsglieder ist.

19. Förderband nach einem der Ansprüche 15 bis 18, bei dem die quergerichteten Kurven eine spiralförmige Bahn umfassen, welche eine vorbestimmte maximale Krümmung mit einem vorbestimmten Krümmungsradius hat, das Band ferner eine Stützverbindung (40) aufweist, welche entlang des innenliegenden Randes des Bande angeordnet ist, die Stützverbindung (40) einen in Längsrichtung verlaufenden Abschnitt (48) hat, welcher sowohl in Längsrichtung zwischen einem Paar von benachbarten Stäben als auch in vertikaler Richtung von den Stäben entfernt verläuft, und wenigstens einen lappenförmigen Ansatzabschnitt (50) hat, welcher sich in Querrichtung des Längsabschnitts erstreckt, wobei der lappenförmige Ansatzabschnitt in einem vorbestimmten vertikalen Abstand von den Stäben derart angeordnet ist, daß ein innenliegender Rand eines benachbarten, vertikal im Abstand liegenden Trums des Bandes kontaktiert und unterstützt wird, wenn das Band entlang der spiralförmigen Bahn sich bewegt, wobei der Längsabschnitt der Stütztverbindung Öffnungen (55) zur Aufnahme benachbarter Stäbe hat.

20. Förderband nach Anspruch 19, bei dem die Stützverbindung (40) zwischen einem Paar von U-förmigen, innenliegenden Verbindungsgliedern (14 und 15) angeordnet ist, die im Abstand liegenden Schenkelabschnitte (20) der U-förmigen, innenliegenden Verbindungsglieder Endabschnitte in der Nähe des Längsabschnitts der Stützverbindung haben, und bei dem die Endabschnitte im wesentliche senkrecht zu der Quererstreckung der Stäbe verlaufen, um die Stützverbindung bezüglich der Stäbe auszurichten.

21. Förderband nach einem der Ansprüche 15 bis 20 zum Einsatz bei einem Fördersystem (100 oder 201), welches eine Antriebseinrichtung (102 oder 202) zum Bewegen des Bandes entlang einer Förderbahn umfaßt, wobei das System das Band sowohl in einer geradlinigen Richtung als auch in Richtung von quer verlaufenden Kurven in einer einzigen Förderrichtung ausrichtet, wobei die quer verlaufenden Kurven einen spiralförmigen Abschnitt (112) umfassen, welcher eine Mehrzahl von übereinander angeordneten Trumteilen des Bandes bildet und die vorbestimmte maximale Krümmung mit einem vorbestimmten Krümmungsradius im Spiralabschnitt hat.

22. Förderband nach Anspruch 19 oder 20, bei dem die im Abstand liegenden Schenkelabschnitte (20) der innenliegenden Verbindungsglieder (14 und 15) Endabschnitte (46) in der Nähe des Längsabschnitts (48) der Stützverbindung (40) haben, und bei dem die Endabschnitte im wesentlichen senkrecht zu der Quererstreckung der Stäbe (12) verlaufen, um die Stützverbindung bezüglich den Stäben auszurichten.

23. Förderband nach Anspruch 1, bei dem die ersten Verbindungsglieder (14) Verbindungsglieder mit einem Kaltverfestigungsbereich sind und diese umfassen:

zwei Schenkelabschnitte (20); und

einen Verbindungsabschnitt (22), welcher jeweils mit den beiden Schenkelabschnitten verbunden ist;

der Verbindungsabschnitt und jeder der beiden Schenkelabschnitte ein im allgemeinen U-förmiges Verbindungsglied bilden; und

der Verbindungsabschnitt folgendes umfaßt:

einen Bereich ($T_1$) mit einer ersten Dicke; und

einen zweiten Bereich ($T_2$) mit einer verminderten Dicke, wobei der in der Dicke verminderte Bereich ein durch Kompression kaltverfestigter Bereich ist, welcher eine Oberfläche (126) hat, gegen welche einer der Stäbe (12) zur Anlage kommen kann.

24. Förderband nach Anspruch 23, bei dem die Verbindungsglieder mit einem kaltverfestigten Bereich zur Aufnahme von Zugbelastungen versehen sind, jedes der Schenkelabschnitte (20) wenigstens eine Öffnung (25) zur Aufnahme einer der Stäbe (12) des Förderbandes hat, und bei dem die Oberfläche (26), gegen welche einer der Stäbe zur Anlage kommen kann, eine gekrümmte Lagerfläche ist, welche einen Teil der Öffnung bildet.

25. Förderband nach Anspruch 24, bei dem die gekrümmte Lagerfläche (126) eine Krümmung hat, welche etwa gleich groß wie jene der Stäbe (12) ist, so daß einer der Stäbe zur Anlage gegen die Lagerfläche kommen kann.

26. Förderband nach einem der Ansprüche 23 bis 25, bei dem der zweite Bereich ($T_2$) mit verminderter Dicke des Verbindungsabschnittes (22) um wenigstens 90 % der Dicke des ersten Bereichs ($T_1$) an der Stelle mit der maximalen Verminderung reduziert ist.

27. Förderband nach einem der Ansprüche 23 bis 26, bei dem jedes der Verbindungsglieder mit dem kaltverfestigten Bereich in Form eines einzelnen, integralen U-förmigen Verbindungsgliedes ausgebildet ist.

28. Förderband nach einem der Ansprüche 23 bis 27, bei dem der Verbindungsabschnitt (22) eine im wesentlichen ebene, äußere Fläche hat, welche der Oberfläche (126) gegenüberliegt, auf welcher einer der Stäbe zur Anlage kommen kann.

29. Förderband nach einem der Ansprüche 23 bis 28, bei dem jeder der Schenkelabschnitte (20) ferner einen nach außen divergierend verlaufenden Abschnitt (44) aufweist.

30. Förderband nach Anspruch 29, bei dem jeder der Schenkelabschnitte folgendes aufweist:

einen inneren Abschnitt (42), welcher zwischen dem Verbindungsabschnitt (22) und dem nach außen divergierend verlaufenden Abschnitt (44) angeordnet ist, wobei der innere Abschnitt eine Öffnung (25) zur Aufnahme einer der Stäbe (12) des Förderbandes hat, welcher zur Anlage gegen den Bereich ($T_2$) mit verminderter Dicke am Verbindungsabschnitt kommen kann; und

einen äußeren Abschnitt (46), welcher von dem divergierend verlaufenden Abschnitt in Richtung nach außen verläuft und eine Öffnung (24) zur Aufnahme des benachbarten Stabes hat.

31. Förderband nach Anspruch 30, bei dem der äußere Abschnitt (46) im allgemeinen parallel zu dem inneren Abschnitt (42) ist, und der nach außen divergierend verlaufende Abschnitt (44) eine einzige Versetzung zwischen den im allgemeinen parallelen inneren und äußeren Abschnitten der Schenkel bildet.

32. Förderband nach Anspruch 30 oder 31, bei dem der nach außen divergierend verlaufende Abschnitt (44) im allgemeinen senkrecht von dem Verbindungsabschnitt (22) ausgeht.

33. Förderband nach Anspruch 1, welches ferner eine Stützverbindung (40) aufweist, welche im allgemeinen entlang des innenliegenden Randes des Bandes angeordnet ist, wobei die Stützverbindung folgendes umfaßt:

eine im allgemeinen aufrechtstehenden Längsabschnitt (48), welcher einen oberen (51) und einen unteren Abschnitt (49) hat, wobei der untere Abschnitt wenigstens eine Queröffnungseinrichtung (55) zur Aufnahme wenigstens einer der Stäbe darin hat; und

die ersten und zweiten lappenförmigen Stützansatzabschnitte (50) sich von dem oberen Abschnitt (51) in Gegenrichtung zu den Querrichtungen erstrecken.

34. Förderband nach Anspruch 33, bei dem der untere Abschnitt (49) der Stützverbindung (40) in Längsrichtung kleiner als der obere Abschnitt (51) ausgelegt ist.

35. Förderband nach Anspruch 33 oder 34, bei dem die Öffnungseinrichtung (55) erste und zweite Öffnungen für die ersten und zweiten Stäbe (12) bildet.

36. Förderband nach einem der Ansprüche 33 bis 35, bei dem die ersten und zweiten lattenförmigen Ansatzabschnitte (50) in einer Längsrichtung einen Abstand voneinander haben.

37. Förderband nach einem der Ansprüche 33 bis 36, bei dem der obere Abschnitt (51) einen Schlitz (56) umfaßt, welcher zwischen den ersten und zweiten, lappenförmigen Ansatzabschnitten (50) der Stützverbindung (40) angeordnet ist.

38. Förderband nach einem der Ansprüche 33 bis 37, bei dem der obere Abschnitt (51) in Winkelrichtung zu dem unteren Abschnitt (49) der Stützverbindung (40) versetzt angeordnet ist.

39. Förderband nach Anspruch 38, bei dem der obere Abschnitt (51) der Stützverbindung (40) zu dem unteren Abschnitt (49) um etwa 4° in Winkelrichtung versetzt angeordnet ist.

40. Förderband nach einem der Ansprüche 33 bis 39, bei dem der Längsabschnitt (48) der Stützverbindung (40) sich in den Abmessungen verringernd von dem oberen Abschnitt (51) zu dem unteren Abschnitt (49) verläuft.

41. Förderband nach Anspruch 1 zur Bewegung durch in Querrichtung weisende Kurven in einer einzigen Förderrichtung, bei dem folgendes vorgesehen ist:

die ersten Verbindungsglieder (14) und die Verbinder (15) ferner eine Mehrzahl von Verbindungsgliedern in einem einzigen regelmäßigen Abstand aufweisen, die etwa entlang des innenliegenden Randes des Bandes angeordnet sind und Öffnungen (24 und 25) zur Aufnahme der ersten Querenden der Stäbe (12) während der etwaigen Gesamtbewegung des Bandes haben; und

die zweiten Verbindungsglieder ferner eine Mehrzahl von Verbindungsgliedern (16a) mit zwei regelmäßigen Abständen aufweisen, die etwa entlang des außenliegenden Randes des Bandes angeordnet sind, wobei die Verbindungsglieder mit zwei regelmäßigen Abstand eine Schwenkbewegung zwischen einer ersten Position und einer zweiten Position ausführen können, wobei die zweiten Querenden der Stäbe in einem ersten regelmäßigen Abstand in der ersten Position der Verbindungsglieder mit zwei regelmäßigen Abständen angeordnet sind und die zweiten Q Querenden der Stäbe in einem zweiten regelmäßigen Abstand in der zweiten Position der Verbindungsglieder mit zwei regelmäßigen Abständen angeordnet sind.

42. Förderband nach Anspruch 41, bei dem jedes Verbindungsglied (16a) mit zwei regelmäßigen Abständen einen Körper (180) umfaßt, welcher eine Schwenköffnung (200) hat, um die die Verbindungsglieder mit zwei regelmäßigen Abstand eine Schwenkbewegung ausführen können, und einen Abstandsveränderungsschlitz (220) hat, wobei das zweite Querende einer der Stäbe (12) in der Schwenköffnung (200) aufgenommen ist und das zweite Querende eines benachbarten Stabes gleitbeweglich in dem Abstandsveränderungsschlitz (220) aufgenommen ist, bei dem der Abstandsveränderungsschlitz einen ersten Abstandsbereich hat, an dem das zweite Querende des jeweils benachbarten Stabes aufgenommen wird, wenn die Stäbe in einem ersten regelmäßigen Abstand angeordnet sind, und einen Bereich mit einem zweiten regelmäßigen Abstand hat, an dem das zweite Querende des jeweils benachbarten Stabes aufgenommen wird, wenn die Stäbe in dem zweiten regelmäßigen Abstand voneinander angeordnet sind.

43. Fördersystem, welches folgendes aufweist:

ein endloses Förderband (10) nach einem der vorangehenden Ansprüche, wodurch ein geradliniger Abschnitt (108) und ein in Querrichtung kurvenförmiger Abschnitt (112) gebildet wird; und

eine Einrichtung (102, 202) zum Antreiben des Förderbandes derart, daß das Band auf dem geradlinigen Abschnitt und dann entlang des zur Seite hin kurvenförmig verlaufenden Abschnittes läuft.

44. Fördersystem nach Anspruch 43, bei dem der in Querrichtung verlaufende kurvenförmige Abschnitt (112) spiralförmig ausgebildet ist.

45. Fördersystem nach Anspruch 44, bei dem die Bandantriebseinrichtung eine drehbare Trommel (102) aufweist, welche um eine vertikale Achse drehbar gelagert ist, wobei die Trommel eine äußere Fläche aufweist, welche mit den inneren Querrandbereichen des Bandes (10) zusammenarbeitet.

46. Fördersystem nach Anspruch 44, bei dem die Bandantriebseinrichtung einen innenliegenden Drehkäfig (202) aufweist, welcher eine Mehrzahl von in Vertikalrichtung verlaufenden Antriebsteilen hat.

47. Fördersystem nach einem der Ansprüche 44 bis 46, bei dem die Bandantriebseinrichtung (102, 202) das Band (10) unter einer relativ geringen Spannung antreibt.

48. Fördersystem nach einem der Ansprüche 44 bis 47, bei dem der in Querrichtung kurvenförmig verlaufende Abschnitt (112) eine Mehrzahl von stapelförmig angeordneten Trumteilen des Bandes (10) bildet, und bei dem das System ferner wenigstens eine Stützverbindung (40) aufweist, welche in der Nähe der ersten Verbindungsglieder (14) und der Verbinder (15) angeordnet ist, die Stützverbindung einen innenliegenden Rand eines benachbart in vertikalem Abstand angeordneten Trums des Bandes kontaktiert und stützt, wenn das Band derart angeordnet ist, daß es sich längs des in Querrichtung verlaufenden kurvenförmigen Abschnitts bzw. gekrümmten Abschnitts bewegt.

49. Fördersystem nach Anspruch 44, bei dem die Bandantriebseinrichtung ferner ein drehbewegliches Antriebsteil (102) aufweist, welches in Reibschlußverbindung mit den inneren Randbereichen des Bandes (10) in dem in Querrichtung verlaufenden Kurvenabschnitt (112) ist.

50. Fördersystem nach Anspruch 44, bei dem die Bandantriebseinrichtung ferner ein drehbewegliches Antriebsteil (102) aufweist, welches zwangsweise mit den inneren Randbereichen des Bandes (10) bei dem in Querrichtung verlaufenden kurvenförmigen Abschnitt (112) zusammenarbeitet.

51. Fördersystem nach einem der Ansprüche 43 bis 50, bei dem während der geradlinigen Förderbewegung die ersten Verbindungsglieder (14) und die Verbinder (15) unter Zugbelastung stehen, während die zweiten Verbindungsglieder (16 oder 17) nicht unter Zugbelastung stehen, und bei dem während der Förderbewegung in die in Querrichtung gerichtet Kurvenrichtung wenigstens die ersten Verbindungsglieder oder die Verbinder unter Zugbelastung bleiben.

52. Fördersystem, welches ein Förderband (10) nach Anspruch 41 oder 42 umfaßt, wobei das System Einrichtungen (340 oder 380) zum Verschwenken der Verbindungsglieder (16a) mit zwei regelmäßigen Abstand zwischen den ersten und zweiten Positionen umfaßt.

53. Fördersystem nach Anspruch 52, bei dem die Einrichtung zum Verschwenken einer Nockenfläche (340 oder 380) umfaßt, welche mit den Verbindungsgliedern (16a) mit zwei regelmäßigen Abständen zusammenarbeitet.

**Revendications**

1. Une bande transporteuse (10) comprenant: une pluralité de barreaux (12) s'étendant transversalement par rapport à la longueur de la bande, entre les bords intérieurs et extérieurs de la bande; une pluralité de premiErs et seconds maillons d'articulations de couplage de barreaux, dont aucun n'est disposé de façon sensiblement centrale par rapport auxdits barreaux, lesdits premiers maillons d'articulations étant disposés adjacents aux extrémités intérieures desdits barreaux, chacun desdits premiers maillons d'articulation présentant une forme de U avec des branches espacées (20) reliant l'un à l'autre deux barreaux adjacents au voisinage du bord intérieur de ladite bande; et lesdits seconds maillon d'articulations (16 ou 17) étant disposés adjacents aux extrémités extérieures desdits barreaux, chacun desdits seconds maillons d'articulation reliant des barreaux adjacents du bord extérieur de ladite bande, caractérisée par une pluralité de connecteurs (15), disposés à l'extérieur et au voisinage direct desdits premiers maillons d'articulation (14), depuis le centre d'une courbe sur laquelle se déplace la bande, loin des centres des barreaux correspondants, et qui relient l'un à l'autre des barreaux adjacents (12), lesdits connecteurs et lesdits premiers maillons d'articulations maintenant lesdits barreaux sensiblement parallèles les uns aux autres au cours du mouvement de transport de la bande en ligne droite sous l'action d'une sollicitation de traction; et ladite bande étant conçue pour maintenir lesdites extrémités intérieures desdits barreaux à un premier pas les unes des autres au cours du mouvement en ligne droite de la bande sous l'action d'une sollicitation de traction, pour maintenir lesdites extrémités intérieures desdits barreaux sensiblement audit premier pas les unes des autres lors du déplacement incurvé de ladite bande, et pour permettre auxdites extrémités intérieures desdits barreaux de se déplacer les unes par rapport aux autres selon un second pas plus grand lors dudit déplacement incurvé de la bande.

2. Une bande transporteuse selon la revendication 1, dans laquelle chacun desdits connecteurs (15) comprend en outre une paire de branches (20) s'étendant généralement dans la direction longitudinale de la bande et reliant des barreaux adjacents (12) en des positions espacées le long de ladite bande.

3. Une bande transporteuse selon la revendication 1, dans laquelle chacun desdits connecteurs (15) présente sensiblement une forme de U et dans laquelle chacun desdits connecteurs en forme de U comprend en outre une paire de parties de branches (20) s'étendant sensiblement dans la direction longitudinale de la bande et une partie de connexion de branches (22) reliant lesdites parties de branches, et dans laquelle chacune desdites parties de branche présente des trous (24, 25) formées à travers ces branches de façon à recevoir des barreaux adjacents (12).

4. Une bande transporteuse selon l'une quelconque des revendications 1 à 3, dans laquelle, au cours du mouvement de transport, les premiers maillons d'articulation (14) et lesdits connecteurs (15) agissent en traction, tandis que lesdits seconds maillons d'articulation (16 ou 17) n'agissent pas en traction, et dans laquelle lors du mouvement de transport incurvé latéralement, au moins lesdits premiers maillons d'articulation ou lesdits connecteurs restent tracteurs.

5. Une bande transporteuse selon l'une quelconque des revendications précédentes, dans laquelle lesdits premiers maillons d'articulation (14), lesdits seconds maillons d'articulation (16 ou 17) et lesdits connecteurs (15) et sont des organes séparés distincts desdits barreaux (12).

6. Une bande transporteuse selon l'une quelconque des revendications précédentes, comprenant en outre au moins un maillon d'articulation de support (40) disposé adjacent auxdits premiers maillon d'articulations et auxdits connecteurs (15), lesdits maillons d'articulations de support étant susceptibles d'entrer en contact et de supporter un bord intérieur d'un gradin adjacent et verticalement espacé de ladite bande lorsque ladite bande est disposée de façon à se déplacer le long d'une trajectoire de transport hélicoïdale.

7. Une bande transporteuse selon la revendication 6, dans laquelle ledit maillon d'articulation de support (40) est fixé entre des paires desdits barreaux adjacents (12) et dans laquelle ledit maillon d'articulation de support comprend en outre une partie longitudinale (48) s'étendant à la fois longitudinalement entre une paire de barreaux adjacents et verticalement en s'éloignant desdits barreaux, et présentant au moins une portion de patte (50) s'étendant transversalement par rapport à ladité partie longitudinale, ladite partie longitudinale présentant des trous (55) à travers lesquels s'étend une paire adjacente de barreaux, lesdites portions de patte étant séparées d'une distance verticale prédéterminée par rapport auxdits barreaux.

8. Une bande transporteuse selon la revendication 1, dans laquelle au moins une portion de patte (50) présente en outre des premières et secondes portions de patte s'étendant dans des directions transversales opposées à partir de ladite partie longitudinale (48).

9. Une bande transporteuse selon la revendication 7 ou 8, dans laquelle lesdites parties longitudinales (48) dudit maillon d'articulation de support (40) présente une section inférieure (49) avec des trous (55) destinés à accouplés auxdits barreaux (12) et une section supérieure (51) s'étendant verticalement et longitudinalement à partir de la section inférieure, ladite section supérieure étant décalée angulairement par rapport à ladite section inférieure et présentant une dimension longitudinale telle que les sections supérieures des maillons d'articulation de support adjacents puissent se recouvrir l'une l'autre.

**10.** Une bande transporteuse selon l'une quelconque des revendications 6 à 9, dans laquelle lesdits connecteurs (15) sont des maillons d'articulation en forme de U, chacun desdits premiers maillons d'articulation (14) et desdits maillons d'articulation de connexion en forme de U étant disposés de chaque côté dudit maillon d'articulation de support (40).

**11.** Une bande transporteuse selon l'une quelconque des revendications précédentes, dans laquelle lesdits seconds maillons d'articulation (16, 17) comprennent en outre au moins un maillon d'articulation à barre (17) présentant des trous destinés à recevoir et à relier des paires adjacentes desdits barreaux (12).

**12.** Une bande transporteuse selon l'une quelconque des revendications précédentes, dans laquelle chacun desdits premiers maillons d'articulation (14) et dudit connecteur (15) présentent des trous (24, 25) légèrement surdimensionnés par rapport à la largeur en section transversale desdits barreaux (12).

**13.** Une bande transporteuse selon l'une quelconque des revendications précédentes, dans laquelle lesdits seconds maillons d'articulation (16) présentent des fentes longitudinales (35) reliant lesdits barreaux adjacents (12) le long du bord extérieur de ladite bande, lesdites fentes recevant lesdits barreaux transversaux au voisinage de leurs extrémités, et présentant une longueur suffisante pour permettre le mouvement relatif souhaité desdits barreaux lorsque l'on passe dudit déplacement en ligne droite de ladite bande audit déplacement incurvé de ladite bande.

**14.** Une bande transporteuse selon l'une quelconque des revendications précédentes, dans laquelle le rapport entre le rayon intérieure de rotation de ladite bande et la largeur de ladite bande est inférieur à 1,4 sur 1.

**15.** Une bande transporteuse selon la revendication 1, destinée à transporter à la fois dans une direction rectiligne et autour de courbes latérales orientées dans une seule direction; lesdits courbes latérales présentant une courbure maximale prédéterminé et un rayon de courbure prédéterminé, dans laquelle:

- lesdits premiers maillons d'articulation (14) et lesdits connecteurs (15) sont constituées par des maillons d'articulation présentant une forme générale de U et reliant les extrémités intérieures de barreaux adjacents (12), lesdits premiers maillons d'articulation et lesdits connecteurs étant définis comme les maillons d'articulation intérieurs et lesdits seconds maillons d'articulation (16, 17) étant définis comme les maillons d'articulation extérieurs; et

- lesdits maillons d'articulation intérieurs en forme de U (14 et 15) présentant chacun une paire de portion de branche espacée (20) reliée par une partie de liaison (22), chacune desdites portions de branches présentant des trous (24 et 25) destinés à recevoir des barreaux adjacents, chacun desdits maillons d'articulation extérieurs (16 ou 17) présentant des trous (34 et 35) destinés à recevoir des barreaux adjacents, lesdits trous dans lesdites branches desdits maillons d'articulation intérieurs (14 et 15) présentant des surfaces d'extrémité espacées d'un premier espacement longitudinal pré-déterminé, lesdits trous dans lesdits maillons d'articulation extérieurs présentant des surfaces d'extrémité espacées d'un premier espacement longitudinal prédéterminé, lesdits trous dans lesdites maillons d'articulation extérieurs présentant des surfaces d'extrémité séparées par un second espacement longitudinal prédéterminé, lesdits premier et second espacements longitudinaux étant reliés l'un à l'autre et au rayon de courbure prédéterminé de telle sorte qu'en déplacement de transport en ligne droite, les extrémités intérieures desdits barreaux soient maintenues à un premier pas et que les maillons d'articulation intérieurs en forme de U (14 et 15) soient tracteurs tandis que les maillons d'articulation extérieurs (16 ou 17) soient non tracteurs, et qu'au cours du déplacement de transport latéral incurvé, les extrémités intérieures desdits barreaux soient maintenues sensiblement au premier pas et qu'au moins l'un desdits maillons d'articulation intérieurs en forme de U (14 et 15) reste tracteur tandis que les extrémités extérieures desdits barreaux se déplacent pour prendre un second pas plus important.

**16.** Une bande transporteuse selon la revendication 15, dans laquelle ladite partie de liaison (22) de chacun desdits maillons d'articulation intérieurs en forme de U présente une surface de support durcie par traitement (126) et contre laquelle peut porter l'un desdits barreaux.

17. Une bande transporteuse selon la revendication 15 ou 16, dans laquelle la corrélation entre les surfaces d'extrémité longitudinalement espacées des trous (24, 25, 34, 35) dans lesdits maillons d'articulation intérieurs et extérieurs (14, 15, 16, 17) oblige les extrémités extérieures desdits barreaux (12) à tenir en contact avec les surfaces d'extrémités opposées des trous (34 et 35) desdits maillons d'articulation extérieurs lorsque la bande se déplace sur une courbe latérale présentant la courbure maximale prédéterminée, les maillons d'articulation extérieurs supportant une proportion minime de la charge de traction pour assurer qu'au moins l'un desdits maillons d'articulation intérieurs reste tracteur et que les extrémités intérieurs desdits barreaux restent sensiblement au premier pas.

18. Une bande transporteuse selon la revendication 17, dans laquelle le rapport entre l'espacement prédéterminé entre les trous (34, 35) desdits maillons d'articulation extérieurs (16, 17) et la distance depuis le centre du rayon de courbure prédéterminé jusqu'aux maillons d'articulation extérieurs les plus à l'extérieur (17) est seulement légèrement supérieur au rapport entre l'espacement prédéterminé entre les trous (24, 25) desdits maillons d'articulation intérieurs (14, 15) et la distance depuis le centre du rayon de courbure prédéterminé jusqu'à la branche la plus extérieure (20) desdits maillons d'articulation intérieurs.

19. Une bande transporteuse selon l'une quelconque des revendications 15 à 18, dans laquelle les courbes latérales comprennent une trajectoire hélicoïdale présentant la courbure maximale prédéterminé avec un rayon de courbure prédéterminé, ladite bande comprenant en outre un maillon d'articulation de support (40) disposée le long du bord intérieur de ladite bande, ladite maillon d'articulation de support (40) présentant une partie longitudinale (48) s'étendant à la fois longitudinalement entre une paire desdits barreaux adjacents et verticalement en s'éloignant desdits barreaux, et au moins une partie de patte (50) s'étendant transversalement à partir de ladite partie longitudinale, ladite partie de patte étant espacée d'une distance verticale prédéterminée desdits barreaux de façon à venir en contact avec et supporter un bord intérieur d'un gradin adjacent et verticalement espacé de ladite bande lorsque ladite bande se déplace le long de la trajectoire hélicoïdale, ladite partie longitudinale dudit maillon d'articulation de support présentant des trous (55) destinés à recevoir des barreaux adjacents.

20. Une bande transporteuse selon la revendication 19, dans laquelle ledit maillon d'articulation de support (40) est disposé entre une paire desdits maillons d'articulations intérieurs en forme de U (14 et 15), lesdites parties espacées de branche (20), desdites maillons d'articulation intérieur en forme de U présente des parties d'extrémité adjacentes à la partie longitudinale dudit maillon d'articulation de support, et lesdites parties d'extrémité s'étendant de façon sensiblement perpendiculaire à la direction transversale desdits barreaux de façon à aligner le maillon d'articulation de support par rapport auxdits barreaux.

21. Une bande transporteuse selon l'une quelconque des revendications 15 à 20, destinée à être utilisée dans un système de transport (100 ou 201) comprenant des moyens d'entraînement (102 ou 202) destinés à entraîner la bande le long d'une trajectoire de transport, ledit système orientant la bande à la fois dans une direction rectiligne et le long de courbes latérales tournant dans une seule direction, lesdites courbes latérales comprenant une partie hélicoïdales (112) formant une pluralité de gradins superposés de la bande, et présentant la courbure maximale prédéterminée et le rayon de courbure prédéterminé maximal dans la partie hélicoïdale.

22. Une bande transporteuse selon la revendication 19 ou 20, dans laquelle lesdites parties de branche espacées (20) desdits maillons d'articulation intérieurs (14 et 15) présentent des sections d'extrémité (46) adjacentes à la partie longitudinale (48) dudit maillon d'articulation de support (40), et dans laquelle lesdites parties d'extrémité s'étendent de façon sensiblement perpendiculaire à la direction transversale des barreaux (12) de façon à aligner ledit maillon d'articulation d'articulation par rapport auxdits barreaux.

23. Une bande transporteuse selon la revendication 1, dans laquelle les premiers maillons d'articulations (14) sont des maillons d'articulation présentant une zone durcie par traitement et comprenant:
- deux parties de branches (20); et
- une partie de liaison (22) reliée à chacune desdites parties de branche; ladite partie de liaison et chacune desdites sections de branche définissant un organe de maillon d'articulation de forme générale de U; et

ladite partie de liaison comprenant:
  . une zone de première épaisseur ($T_1$); et
  . une zone de seconde épaisseur réduite ($T_2$); ladite zone d'épaisseur réduite étant une zone comprimée présentant une surface (126) sur laquelle peut porter l'un des barreaux (12).

24. Une bande transporteuse selon la revendication 23, dans laquelle lesdits maillons d'articulation à zone durcie par traitement sont destinées à supporter la charge de traction, chacune desdites parties de branche (20) présentant au moins un trou (25) pour recevoir l'un desdits barreaux (12) de la bande transporteuse, et ladite surface (126) contre laquelle lesdits barreaux peut porter l'un desdits barreaux étant une surface de portage incurvée de support définissant une partie dudit trou.

25. Une bande transporteuse selon la revendication 24, dans laquelle ladite surface de portage incurvée (126) présente une courbure sensiblement identique à celle desdits barreaux (12), de sorte que l'un desdits barreaux puisse porter contre ladite surface de portage.

26. Une bande transporteuse selon l'une quelconque des revendications 23 à 25, dans laquelle ladite zone d'épaisseur réduite ($T_2$) de ladite partie de liaison (22) est réduite à au moins 90% de ladite zone de première épaisseur ($T_1$) en son point de réduction maximum.

27. Une bande transporteuse selon l'une quelconque des revendications 23 à 26, dans laquelle chacun desdits maillons d'articulation à zone durcie par traitement est formé comme un seul maillon d'articulation monobloc en forme de U.

28. Une bande transporteuse selon l'une quelconque des revendications 23 à 27, dans laquelle ladite partie de liaison (22) présente une surface extérieure sensiblement plane, opposée à ladite surface (126) sur laquelle peut porter l'un desdits barreaux.

29. Une bande transporteuse selon l'une quelconque des revendications 23 à 28, dans laquelle chacune desdites parties de branche (20) comprend en outre une partie (44) divergente vers l'extérieur.

30. Une bande transporteuse selon la revendication (29) dans laquelle chacune desdites parties de branche comprend en outre:

  - une partie intérieure (42) disposée entre la partie de liaison (22) et la partie divergente vers l'extérieur, ladite partie intérieure présentant un trou (25) destiné à recevoir l'un desdits barreaux (12) de la bande transporteuse, qui peut porter sur ladite zone d'épaisseur réduite ($T_2$) de ladite partie de liaison; et
  - une partie extérieure (46) s'étendant à partir de la partie divergente vers l'extérieur et présentant un trou (24) destiné à recevoir un barreau adjacent.

31. Une bande transporteuse selon la revendication 30, dans laquelle ladite partie extérieure (46) est sensiblement parallèle à ladite partie intérieure (42), et dans laquelle ladite partie divergente vers l'extérieur (44) constitue un décalage unique entre les parties intérieures et extérieures sensiblement parallèles des branches.

32. Une bande transporteuse selon la revendication 30 ou 31, dans laquelle la partie divergente vers l'extérieur (44) s'étend de façon sensiblement perpendiculaire à la partie de liaison (22).

33. Une bande transporteuse selon la revendication 1, comprenant en outre un maillon d'articulation de support (40) disposé sensiblement le long de la bordure intérieur de ladite bande, ledit maillon d'articulation de support comprenant:

  - une partie longitudinale sensiblement verticale (48), présentant des parties supérieure (51) et inférieure (49), ladite partie inférieure comprenant au moins des moyens d'ouverture transversale (55) destinés à recevoir au moins l'un desdits barreaux; et
  - des première et seconde partie de patte de support (50) s'étendant à partir de ladite partie supérieure (51) dans des directions transversales opposées.

34. Une bande transporteuse selon la revendication 33, dans laquelle ladite partie inférieure (49) dudit maillon d'articulation de support (40) est longitudinalement plus étroite que ladite partie supérieure (51).

35. Une bande transporteuse selon la revendication 33 ou 34, dans laquelle lesdits moyens d'ouverture (45) définissent des première et seconde ouvertures pour les premier et second barreaux (12).

**36.** Une bande transporteuse selon l'une quelconque des revendications 33 à 35, dans laquelle lesdites première et seconde partie de patte (50) sont séparées dans la direction longitudinale.

**37.** Une bande transporteuse selon l'une quelconque des revendications 33 à 36, dans laquelle ladite partie supérieure (51) comprend une fente (56) disposée entre lesdites première et seconde parties de patte (50) dudit maillon d'articulation de support (40).

**38.** Une bande transporteuse selon l'une quelconque des revendications 33 à 37, dans laquelle ladite partie supérieure (51) présente un décalage angulaire par rapport à ladite partie inférieure (49) dudit maillon d'articulation de support (41).

**39.** Une bande transporteuse selon la revendication 38, dans laquelle ladite partie supérieure (51) du maillon d'articulation de support (40) présente un décalage angulaire d'approximativement quatre degrés par rapport à ladite partie inférieure (49).

**40.** Une bande transporteuse selon l'une quelconque des revendications 33 à 39, dans laquelle ladite partie longitudinale (48) du maillon d'articulation de support (40) se rétrécit depuis ladite partie supérieure (51) jusqu'à ladite partie inférieure (49).

**41.** Une bande transporteuse selon la revendication 1, destinée à se déplacer le long de courbes latérales dans une seule direction, dans laquelle:
- lesdites premiers maillons d'articulation (14) et lesdits connecteurs (15) comprennent en outre une pluralité de maillons d'articulation à pas unique disposées approximativement le long de la bordure intérieur de la bande et présentant des trous (24 et 25) destinés à recevoir des premières extrémités transversales desdits barreaux (12) durant sensiblement la totalité du déplacement de la bande; et
- lesdits seconds maillons d'articulation comprennent en outre une pluralité de maillons d'articulation à double pas (16a) disposées approximativement le long du bord extérieur de la bande, lesdits maillons d'articulation à double pas étant susceptibles de subir un mouvement de pivotement entre une première position et une seconde position, les deuxièmes extrémités transversales desdits barreaux étant disposées selon le premier pas dans la première position desdits maillons d'articulation à pas double, et les secondes extrémités transversales desdits barreaux étant disposées selon le deuxième pas dans la seconde position desdits maillons d'articulation à double pas.

**42.** Une bande transporteuse selon la revendication 41, dans laquelle chacun desdits maillons d'articulation à double pas (16a) comprend un corps (180) présentant une ouverture de pivot (200) autour de laquelle lesdits maillons d'articulation à pas double peuvent pivoter, et une fente de changement de pas (220), la seconde extrémité transversale de l'un desdits barreaux (12) étant reçue dans ladite ouverture de pivot (200), et la deuxième extrémité transversale d'un barreau adjacent parmi lesdits barreaux étant disposée de façon coulissante dans ladite fente de changement de pas (220), ladite fente de changement de pas présentant une zone de premier pas, dans laquelle la deuxième extrémité transversale dudit barreau adjacent parmi lesdits barreaux est disposée lorsque les barreaux sont séparées du premier pas, et une zone de second pas, dans laquelle la seconde extrémité transversale dudit barreau adjacent parmi lesdits barreaux est disposée lorsque les barreaux sont espacés du second pas.

**43.** Un système de transport comprenant:
- une bande transporteuse sans fin (10) telle que revendiquée dans l'une quelconque des revendications précédentes, afin de définir une section rectiligne (108) et une section incurvée latéralement (112); et
- des moyens (102, 202) destinés à entraîner ladite bande transporteuse de telle sorte que ladite bande se déplace le long de ladite section rectiligne puis ensuite le long de ladite section incurvée latéralement.

**44.** Un système de transport selon la revendication 43, dans lequel ladite section incurvée latéralement (72) est hélicoïdale.

**45.** Un système de transport selon la revendication 44, dans lequel lesdits moyens d'entraînement de la bande comprennent un tambour rotatif (102) monté rotatif autour d'un axe vertical, ledit tambour comprenant une surface extérieure qui vient en contact avec les zones de bord latéral intérieur de ladite bande (10).

**46.** Un système de transport selon la revendication 44, dans lequel lesdits moyens d'entraînement de la bande comprennent une cage intérieure rotative (202) présentant une pluralité d'organes d'entraînement s'étendant verticalement.

**47.** Un système de transport selon l'une quelconque des revendications 44 à 46, dans lequel lesdits moyens d'entraînement de la bande (102, 202) entraînent ladite bande (10) avec une tension relativement faible.

**48.** Un système de transport selon l'une quelconque des revendications 44 à 47, dans lequel lesdites sections incurvées latéralement (112) forment une pluralité de gradins superposées de la bande (10) et dans lequel ledit système comprend en outre au moins un maillon d'articulation de support (40) disposé adjacent auxdits premièrs maillons d'articulation (14) et desdites connecteurs (15), ledit maillon d'articulation de support étant en contact avec et supportant un bord intérieur d'un gradin superposé adjacent et verticalement espacé de ladite bande lorsque ladite bande est disposée de façon à se déplacer le long de section incurvée latéralement.

**49.** Un système de transport selon la revendication 44, dans lequel lesdits moyens d'entraînement de la bande comprennent en outre un organe d'entraînement rotatif (102) venant en contact friction avec les zones de bord intérieur de ladite bande (10) dans la section latéralement incurvée (112).

**50.** Un système de transport selon la revendication 44, dans lequel lesdits moyens d'entraînement de la bande comprennent en outre un organe d'entraînement rotatif (202) venant en contact positif avec les zones de bord intérieur de ladite bande (10) dans la section incurvée latéralement (72).

**51.** Un système de transport selon l'une quelconque des revendications 43 à 50, dans lequel, lors du déplacement de transport rectiligne, lesdits premiers maillons d'articulations (14) et lesdits connecteurs (15) sont tracteurs tandis que lesdits seconds maillons d'articulations (16 ou 17) ne sont pas tracteurs, et dans lequel, au cours du déplacement latéral incurvé de transport, au moins lesdits premiers maillons d'articulation ou lesdits connecteurs restent tracteurs.

**52.** Un système de transport comprenant une bande transporteuse (10) selon la revendication 41 ou 42, le système comprenant des moyens (340 ou 380) destinés à faire pivoter lesdits maillons d'articulation à double pas (16a) entre lesdites première et seconde positions (53).

**53.** Un système de transport selon la revendication 52, dans lequel lesdits moyens pour faire pivoter comprennent une surface de came (340 ou 380) destinée à venir en contact avec lesdits maillons d'articulation à double pas (16a).

## FIG. I.

## FIG. 2.

## FIG. 3.

## FIG. 4.

*FIG. 5.*

22'  14'

42  42

20'  20'

44  44

46  46

*FIG. 6.*

14'  22'

T2  T1

126'  25'

42  20'

44

46  24'

*FIG. 16.*

50  50

56  40

53

48

51

53

49

55

*FIG. 17.*

50

40  50

53

48  51

53

49

*FIG. 18.*

49  40

50

53  50

51

*FIG. 7.*

*FIG. 8.*

*FIG. 9.*

*FIG. 10.*

*FIG. 11.*

FIG. 12.

FIG. 13.

FIG. 14.

FIG. 15.

## FIG. 19.

FIG. 20.

# FIG. 21.

## FIG. 22

## FIG. 23